# EUROPEAN PATENT SPECIFICATION

(11) **EP 2 161 315 B1**
(45) Date of publication and mention of the grant of the patent: **21.11.2012**
(21) Application number: 09167959.7
(22) Date of filing: 17.08.2009
(51) Int. Cl.: C09D 11/00, C09D 11/10

(54) **Ultra-violet curable gellant inks for creating tactile text and images for packaging applications**
Ultraviolett härtbare, gelbildende Tinten zur Erzeugung von fühlbarem Text und Bildern für Verpackungsanwendungen
Encres gélifiantes durcissables à ultraviolets pour créer un texte tactile et des images pour les applications de conditionnement

(30) Priority: 04.09.2008 US 204410
(43) Date of publication of application: 10.03.2010
(73) Proprietor: Xerox Corporation, Rochester, New York 14644 (US); Palo Alto Research Center Incorporated, Palo Alto, California 94304 (US)
(72) Inventor: Belelie, Jennifer L., Oakville Ontario L6N 4A5 (CA); Chretien, Michelle, Mississauga Ontario L5M 7J5 (CA); Chopra, Naveen, Oakville Ontario L6H 6S7 (CA); Keoshkerian, Barkev, Thornhill Ontario L4J 7E8 (CA); Ready, Steven E., Los Altos, CA 94024 (US)
(74) Representative: Grünecker, Kinkeldey, Stockmair & Schwanhäusser

(56) References cited:
- EP-A1- 2 028 240
- US-A- 6 004 419
- US-A1- 2007 142 492
- US-A1- 2008 000 384
- US-A1- 2008 121 727
- US-A1- 2008 122 914
- US-A1- 2008 204 538

## Description

The present disclosure relates generally to methods for forming images on flexible substrates. In specific embodiments, the present disclosure relates to forming or printing images on flexible substrates such as those used in packaging and other applications, through the use of curable phase change inks.

Ink jet printing devices are known in the art. For example, ink jet printing devices are generally of two types: continuous stream and drop-on-demand. In continuous stream ink jet systems, ink is emitted in a continuous stream under pressure through at least one orifice or nozzle. The stream is perturbed, causing it to break up into droplets at a fixed distance from the orifice. At the break-up point, the droplets are charged in accordance with digital data signals and passed through an electrostatic field that adjusts the trajectory of each droplet in order to direct it to a gutter for recirculation or a specific location on a recording medium. In drop-on-demand systems, a droplet is expelled from an orifice directly to a position on a recording medium in accordance with digital data signals. A droplet is not formed or expelled unless it is to be placed on the recording medium. There are generally three types of drop-on-demand ink jet systems. One type of drop-on-demand system is a piezoelectric device that has as its major components an ink filled channel or passageway having a nozzle on one end and a piezoelectric transducer near the other end to produce pressure pulses. Another type of drop-on-demand system is known as acoustic ink printing. As is known, an acoustic beam exerts a radiation pressure against objects upon which it impinges. Thus, when an acoustic beam impinges on a free surface (that is, liquid/air interface) of a pool of liquid from beneath, the radiation pressure which it exerts against the surface of the pool may reach a sufficiently high level to release individual droplets of liquid from the pool, despite the restraining force of surface tension. Focusing the beam on or near the surface of the pool intensifies the radiation pressure it exerts for a given amount of input power. Still another type of drop-on-demand system is known as thermal ink jet, or bubble jet, and produces high velocity droplets. The major components of this type of drop-on-demand system are an ink filled channel having a nozzle on one end and a heat generating resistor near the nozzle. Printing signals representing digital information originate an electric current pulse in a resistive layer within each ink passageway near the orifice or nozzle, causing the ink vehicle (usually water) in the immediate vicinity to vaporize almost instantaneously and create a bubble. The ink at the orifice is forced out as a propelled droplet as the bubble expands.

In a typical design of a piezoelectric ink jet device, the image is applied by jetting appropriately colored inks during four to eighteen rotations (incremental movements) of a recording medium, such as an image receiving member or intermediate transfer member, with respect to the ink jetting head. That is, there is a small translation of the print head with respect to the recording medium in between each rotation. This approach simplifies the print head design, and the small movements ensure good droplet registration. At the jet operating temperature, droplets of liquid ink are ejected from the printing device. When the ink droplets contact the surface of the recording medium, they quickly solidify to form a predetermined pattern of solidified ink drops.

U.S. Patent No. 6,644,763 describes a method for creating raised and special printing effects using ink jet technology. The method includes the steps of depositing a light curable photo-polymer material on the area selected for the printing effects, and curing the area. The amount of material to be deposited corresponds to the area selected for the printing effects and the height of the raised area relative to the medium on which the photo-polymer material is deposited. See the Abstract.

Ink jet printing processes may employ inks that are solid at room temperature and liquid at elevated temperatures. Such inks may be referred to as solid inks, hot melt inks, phase change inks and the like. For example, U.S. Patent No. 4,490,731 discloses an apparatus for dispensing solid ink for printing on a recording medium such as paper. In thermal ink jet printing processes employing hot melt inks, the solid ink is melted by the heater in the printing apparatus and utilized (jetted) as a liquid in a manner similar to that of conventional thermal ink jet printing. Upon contact with the printing recording medium, the molten ink solidifies rapidly, enabling the colorant to substantially remain on the surface of the recording medium instead of being carried into the recording medium (for example, paper) by capillary action, thereby enabling higher print density than is generally obtained with liquid inks. Advantages of a phase change ink in ink jet printing are thus elimination of potential spillage of the ink during handling, a wide range of print density and quality, minimal paper cockle or distortion, and enablement of indefinite periods of nonprinting without the danger of nozzle clogging, even without capping the nozzles.

The use of ink jet printers in forming raised printed images is also known, for example, as indicated in U.S. Patents Nos. 6,644,763 and 5,627,578 above. However, these printers for forming raised images are typically dedicated machines designed and used solely for raised print applications, such as forming Braille images. Where a user requires only a certain portion of print jobs to be done utilizing raised print, it can be costly for the user to have two print devices, one strictly for the raised print jobs.

In general, phase change inks (sometimes referred to as "hot melt inks") are in the solid phase at ambient temperature, but exist in the liquid phase at the elevated operating temperature of an ink jet printing device. At the jet operating temperature, droplets of liquid ink are ejected from the printing device and, when the ink droplets contact the surface of the recording medium, either directly or via an intermediate heated transfer belt or drum, they quickly solidify to form a predetermined pattern of solidified ink drops.

Phase change inks for color printing typically comprise a phase change ink carrier composition which is combined with a phase change ink compatible colorant. In a specific embodiment, a series of colored phase change inks can be formed by combining ink carrier compositions with compatible subtractive primary colorants. The subtractive primary colored phase change inks can comprise four component dyes or pigments, namely, cyan, magenta, yellow and black, although the inks are not limited to these four colors. These subtractive primary colored inks can be formed by using a single dye or pigment or a mixture of dyes or pigments. For example, magenta can be obtained by using a mixture of Solvent Red Dyes or a composite black can be obtained by mixing several dyes. U.S. Patent 4,889,560, U.S. Patent 4,889,761, and U.S. Patent 5,372,852 teach that the subtractive primary colorants employed can comprise dyes from the classes of Color Index (C.I.) Solvent Dyes, Disperse Dyes, modified Acid and Direct Dyes, and Basic Dyes. The colorants can also include pigments, as disclosed in, for example, U.S. Patent 5,221,335. U.S. Patent 5,621,022 discloses the use of a specific class of polymeric dyes in phase change ink compositions.

Phase change inks have also been used for applications such as postal marking, industrial marking, and labeling.

Phase change inks are desirable for ink jet printers because they remain in a solid phase at room temperature during shipping, long term storage, and the like. In addition, the problems associated with nozzle clogging as a result of ink evaporation with liquid ink jet inks are largely eliminated, thereby improving the reliability of the ink jet printing. Further, in phase change ink jet printers wherein the ink droplets are applied directly onto the final recording medium (for example, paper, transparency material, and the like), the droplets solidify immediately upon contact with the recording medium, so that migration of ink along the printing medium is prevented and dot quality is improved.

Radiation curable inks generally comprise at least one curable monomer, a colorant, and a radiation activated initiator, specifically a photoinitiator, that initiates polymerization of curable components of the ink, specifically of the curable monomer.

U. S. Patent 7,279,587 of Peter G. Odell, Eniko Toma, and Jennifer L. Belelie discloses photoinitiating compounds useful in curable phase change ink compositions. In embodiments, a compound of the formula 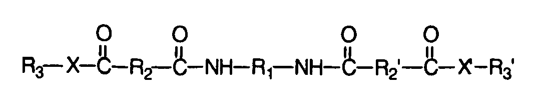 is disclosed wherein R₁ is an alkylene, arylene, arylalkylene, or alkylarylene group, R₂ and R₂' each, independently of the other, are alkylene, arylene, arylalkylene, or alkylarylene groups, R₃ and R₃' each, independently of the other, are either (a) photoinitiating groups, or (b) groups which are alkyl, aryl, arylalkyl, or alkylaryl groups, provided that at least one of R₃ and R₃' is a photoinitiating group, and X and X' each, independently of the other, is an oxygen atom or a group of the formula -NR₄-, wherein R₄ is a hydrogen atom, an alkyl group, an aryl group, an arylalkyl group, or an alkylaryl group.

U.S. Patent Publication 20070120910, Serial Number 11/290,202, Published May 31, 2007, of Peter G. Odell, Eniko Toma, and Jennifer L. Belelie, entitled "Phase Change Inks Containing Photoinitiator With Phase Change Properties and Gellant Affinity" describes, in embodiments, a phase change ink comprising a colorant, an initiator, and an ink vehicle, said ink vehicle comprising (a) at least one radically curable monomer compound, and (b) a compound of the formula 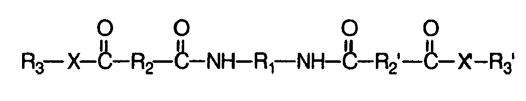 wherein R₁ is an alkylene, arylene, arylalkylene, or alkylarylene group, R₂ and R₂' each, independently of the other, are alkylene, arylene, arylalkylene, or alkylarylene groups, R₃ and R₃' each, independently of the other, are either (a) photoinitiating groups, or (b) groups which are alkyl, aryl, arylalkyl, or alkylaryl groups, provided that at least one of R₃ and R₃' is a photoinitiating group, and X and X' each, independently of the other, is an oxygen atom or a group of the formula -NR₄-, wherein R₄ is a hydrogen atom, an alkyl group, an aryl group, an arylalkyl group, or an alkylaryl group.

U.S. Patent 7,279,587 of Jennifer L. Belelie, Adela Goredema, Peter G. Odell, and Eniko Toma entitled "Method for Preparing Curable Amide Gellant Compounds," issued August 21, 2007 describes, in embodiments, a process for preparing a compound of the formula 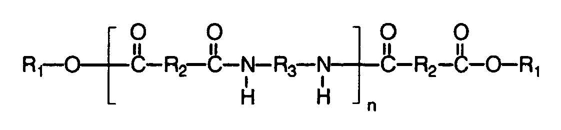 wherein R₁ is an alkyl group having at least one ethylenic unsaturation, an arylalkyl group having at least one ethylenic unsaturation, or an alkylaryl group having at least one ethylenic unsaturation, R₂ and R₃ each, independently of the others, are alkylene groups, arylene groups, arylalkylene groups, or alkylarylene groups, and n is an integer representing the number of repeat amide units and is at least 1, said process comprising:
(a) reacting a diacid of the formula

   HOOC-R₂-COOH

   with a diamine of the formula 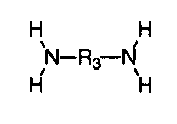 in the absence of a solvent while removing water from the reaction mixture to form an acid-terminated oligoamide intermediate; and
(b) reacting the acid-terminated oligoamide intermediate with a monoalcohol of the formula

   R₁-OH

   in the presence of a coupling agent and a catalyst to form the product.

U.S. Patent 7,276,614 of Eniko Toma, Peter G. Odell, Adela Goredema, and Jennifer L. Belelie, entitled "Curable Amide Gellant Compounds," issued October 2, 2007 describes, in embodiments, a compound of the formula 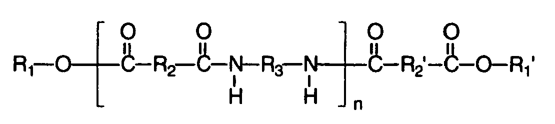 wherein R₁ and R₁' each, independently of the other, is an alkyl group having at least one ethylenic unsaturation, an arylalkyl group having at least one ethylenic unsaturation, or an alkylaryl group having at least one ethylenic unsaturation, R₂, R₂', and R₃ each, independently of the others, are alkylene groups, arylene groups, arylalkylene groups, or alkylarylene groups, and n is an integer representing the number of repeat amide units and is at least 1.

U. S. Patent Publication 20070123606, Serial Number 11/290,121, Published May 31, 2007, of Eniko Toma, Jennifer L. Belelie, and Peter G. Odell entitled "Phase Change Inks Containing Curable Amide Gellant Compounds," describes, in embodiments, a phase change ink comprising a colorant, an initiator, and a phase change ink carrier, said carrier comprising at least one radically curable monomer compound and a compound of the formula 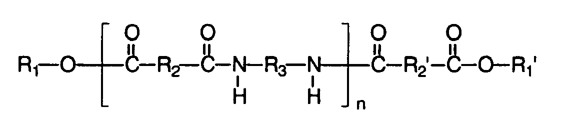 wherein R₁ and R₁' each, independently of the other, is an alkyl group having at least one ethylenic unsaturation, an arylalkyl group having at least one ethylenic unsaturation, or an alkylaryl group having at least one ethylenic unsaturation, R₂, R₂', and R₃ each, independently of the others, are alkylene groups, arylene groups, arylalkylene groups, or alkylarylene groups, and n is an integer representing the number of repeat amide units and is at least 1.

U. S. Patent 7,271,284 of Eniko Toma, Adela Goredema, Jennifer L. Belelie, and Peter G. Odell entitled "Process for Making Curable Amide Gellant Compounds," issued September 18, 2007, describes, in embodiments, a process for preparing a compound of the formula 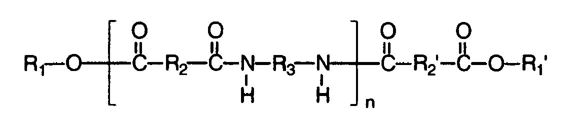 having substituents as defined therein.

Printing on flexible packaging substrates is useful for various applications. The term "flexible" is intended to refer to thin film or foil materials which are often supplied in a roll format, printed on, and then rolled up again after printing, although flexible is not limited to these rolled materials. Exemplary flexible packaging substrates include plastics, metal foils, laminates thereof, and laminates with paper. Flexible packaging substrates can be used, for example, to package food, pharmaceuticals, cosmetics, or tobacco.

Currently, digital printing on flexible packaging substrates is often done with liquid toners or ultraviolet-curable inks. Liquid toners can suffer from image robustness problems and can lack durability. For example, they can have poor scratch, rub and smear resistance. Conventional ultraviolet curable inks have low viscosity. As a result, they can tend to flow laterally, especially on non-porous flexible packaging substrates, resulting in irregular dot growth. Lateral spreading can be decreased by pinning, which is a partial cure of the UV ink to increase its viscosity. In addition to prevention of lateral spreading, pinning is often done after printing each color in color images so that the next color will impinge onto a stable ink surface and not mix and/or flow with the ink printed previously. However, the ultraviolet lamps required for pinning represent additional equipment and power cost which can increase the cost of the printed flexible substrate.

Brand owners, designers, and printers are beginning to request package printing with additional sensory features, for example, tactile effects, to invoke a feeling of increased value to their products. By adding tactile effects to packaging, it immediately becomes differentiated from other similar products, providing a point-of-purchase (POP) advertising tool.

US-A-2007/142492 discloses a method for forming an image, said method comprising:
applying a radiation-curable ink to a substrate in an imagewise manner, wherein the radiation-curable ink comprises a curable monomer or oligomer, a curable wax, a colorant and at least one initiator; and
exposing the radiation-curable ink to radiation to cure the ink.

US-A-2008/000384 discloses a method of forming an image, comprising:
melting a radiation-curable phase change ink comprising an ink vehicle that includes at least one radiation-curable carrier, at least one gellant, at least one radiation-curable wax and at least one photoinitiator;
jetting the radiation-curable phase change ink onto an image receiving substrate, wherein the radiation-curable phase change ink forms a gel state;
exposing the radiation-curable phase change ink on the image receiving substrate to ultraviolet light to cure the curable components of the radiation-curable phase change ink.

US-A-2008/122914 relates to a radiation-curable phase change ink vehicle having improved gellant solubility, the ink vehicle comprising:
at least a first comonomer,
at least a second comonomer that is different from the first comonomer, and
at least one gellant comprising a curable epoxy polyamide composite gellant;
wherein the first comonomer and the second comonomer are radiation-curable monomers.

EP-A-2028240 discloses a process comprising (I) incorporating into an ink-jet printing apparatus radiation-curable phase change ink comprising a white colorant; a colorant dispersant; and an ink vehicle comprising at least one curable monomer; and at least one rheology control agent; (II) melting the ink; (III) causing droplets of the melted ink to be ejected in an imagewise pattern onto a substrate; and (IV) exposing the imagewise pattern to ultraviolet radiation.

US-A-2008/204538 discloses a method for forming an image onto a corrugated substrate comprising:
melting a radiation-curable gel based phase changed ink;
depositing at least one drop of the melted ink on the corrugated substrate in a pattern to form an image;
allowing the ink to gel on the substrate; and
curing the ink.

US patent 6,004,419 relates to a process for producing raised images, in particular raised letters for the blind.

US-A-2008/0121727 relates to a machine readable code comprising a set of printed markings, wherein each printed marking of the set has a predetermined height on a substrate and represents a predetermined data value, wherein the set of printed markings includes printed markings representing different data values and having different print heights.

While known compositions and processes are suitable for their intended purposes, a need remains for additional means for forming images or printing on flexible packaging substrates.

Disclosed herein is a method for forming tactile images or a combination of tactile images and regular images, on a flexible packaging substrate comprising depositing an ultraviolet curable phase change ink composition comprising an optional colorant and a phase change ink vehicle comprising a radiation curable monomer or prepolymer; a photoinitiator; a reactive wax; and a gellant directly onto a flexible packaging substrate or depositing the ink onto an intermediate transfer member, in an image area to form a tactile image area or a combination of tactile image area and regular image; forming the tactile image by depositing multiple layers of the ink in locations of the tactile image or portion thereof; when an intermediate transfer member is used, transferring the deposited ink from the intermediate transfer member to the flexible packaging substrate; and curing the ink as defined in claim 1.

Also disclosed herein is a packaging substrate having disposed thereon a tactile image or a combination of tactile image and regular image; wherein the tactile image or combination of tactile image and regular image comprise one or more cured layers of an ultraviolet curable phase change ink composition comprising an optional colorant and a phase change ink vehicle comprising a radiation curable monomer or prepolymer; a photoinitiator; a reactive wax; and a gellant, as defined in claim 12.

The ultraviolet curable phase change gellant inks herein have a high affinity for a number of commonly used packaging substrates, including polyester, polypropylene, and aluminum foil, among others. The gelling property of the ultraviolet curable phase change gellant ink enables excellent dot structure on non-porous flexible packaging substrates, without the need for pinning. During printing of the ultraviolet curable phase change gellant inks herein, the pile height of selected images or text can be increased by the sequential deposition of droplets until the features can be detected by touch. After printing, the substrates are exposed to ultraviolet light to form robust images and structures. The raised features enable an easy way to incorporate additional sensory features to packages, providing a point-of-purchase advertising tool.

Preferred embodiments are set forth in the subclaims.

The patent or application file contains at least one drawing executed in color. Copies of this patent or patent application publication with color drawing(s) will be provided by the Office upon request and payment of the necessary fee.
Fig. 1 is a color photograph of the present ultraviolet curable phase change gellant ink printed on plain paper.
Fig. 2 is a color photograph of the present ultraviolet curable phase change gellant ink printed on glossy paper.
Fig. 3 is a color photograph of the present ultraviolet curable phase change gellant ink printed on a polyester substrate.
Fig.4 is a color photograph of the present ultraviolet curable phase change gellant ink printed on an aluminum foil substrate.
Fig. 5 is a color photograph of the present ultraviolet curable phase change gellant ink printed on a polypropylene substrate.
Fig. 6 is a color photograph of digitally generated ultra-violet curable phase change gellant ink dots according to the present disclosure.

The present invention provides a
method for forming tactile images or a combination of tactile and regular images on a flexible packaging substrate comprising:
   depositing an ultraviolet curable phase change ink composition comprising an optional colorant and a phase change ink vehicle comprising a radiation curable monomer or prepolymer; a photoinitiator; a reactive wax; and a gellant directly onto a flexible packaging substrate or depositing the ink onto an intermediate transfer member, in an image area to form a tactile image area or a combination of tactile image area and regular image;
   forming the tactile image by depositing multiple layers of the ink in locations of the tactile image area or portion thereof;
   when an intermediate transfer member is used, transferring the deposited ink from the intermediate transfer member to the flexible packaging substrate; and
   curing the ink, wherein the tactile image area or a portion thereof has a raised print height of 30 micrometers to 1 milimeter.

The present invention further provides a packaging substrate having disposed thereon a tactile image or a combination of tactile image and regular image;
wherein the tactile image or combination of tactile image and regular image comprise one or more cured layers of an ultraviolet curable phase change ink composition wherein the ink composition as disposed comprises an optional colorant and a phase change ink vehicle comprising a radiation curable monomer or prepolymer; a photoinitiator; a reactive wax; and a gellant,
wherein the flexible packaging substrate comprises a metal foil, a plastic film, paper, or laminates thereof; and
wherein the tactile image area or a portion thereof has a raised print height of 30 micrometers to 1 millimeter.

In embodiments, a method for forming tactile images or a combination of tactile images and regular images (regular images being non raised height or non tactilely perceptible images), on a flexible packaging substrate is described comprising depositing an ultraviolet curable phase change ink composition comprising an optional colorant and a phase change ink vehicle comprising a radiation curable monomer or prepolymer; a photoinitiator; a reactive wax; and a gellant directly onto a flexible packaging substrate or depositing the ink onto an intermediate transfer member, in an image area to form a tactile image area or a combination of tactile image area and regular image; forming the tactile image by depositing multiple layers of the ink in locations of the tactile image or portion thereof; when an intermediate transfer member is used, transferring the deposited ink from the intermediate transfer member to the flexible packaging substrate; and curing the ink.

In embodiments, packaging substrates having disposed thereon a tactile image or a combination of tactile image and regular image are described; wherein the tactile image or combination of tactile image and regular image comprise one or more cured layers of an ultraviolet curable phase change ink composition wherein the ink composition as disposed comprises an optional colorant and a phase change ink vehicle comprising a radiation curable monomer or prepolymer; a photoinitiator; a reactive wax; and a gellant. Package printing with additional sensory features herein can be used in various applications. For example, tactile effects can be printed and used to invoke a feeling of increased value to products. Addition of the tactile effects described herein to packaging can provide immediate differentiation from other similar providing a point of purchase advertising tool.

The tactile images and regular (that is, non-tactile) print images herein can be printed directly onto a substrate or to an intermediate transfer member (such as an imaging drum) and then subsequently transferred to the final substrate. Multiple transfer passes may be needed to attain a tactilely perceptible ink pile height.

The tactile images and regular images herein can be selected using hardware or software connected to a printer through a conventional computer network.

Multiple printing passes can be used to form the tactilely perceptible tactile image area. In embodiments, the method herein comprises depositing successive layers of the ultraviolet curable gellant phase change ink to form the tactilely perceptible tactile image area. For example, a marking material pile height of at least 314 m (31 microns) is perceptible through the sense of touch, whereas conventional solid ink printing or xerography produces a marking material pile height of no more that 10 µm (10 microns) which is not tactilely perceptible.

In embodiments, the raised tactile text or image can be formed by repeatedly depositing ink on the tactile image area or portion thereof until a tactile-perceptible height is achieved. A tactile-perceptible height is one that is easily identified by touch. The tactile image area or a portion thereof has a raised image height of from 30 micrometers to 1 millimeter or from 50 micrometers to 1 millimeter or from 50 micrometers to 100 micrometers. The packing materials created herein are particularly advantageous because the packages will be handled repeatedly and the images created herein are robust and can withstand the repeated handling and remain intact. The ultraviolet curable phase change gellant ink materials herein further provide wide recording medium latitude including, but not limited to, plain and coated papers and flexible recording mediums, which enables printing on any type of flexible packaging material required. In specific embodiments, the packaging substrates herein comprise metal foils, plastic films, papers, and laminates thereof. In specific embodiments, the packaging substrates herein comprise aluminum foil, polyester film, or polypropylene film.

In combination with the packaging substrates herein, any suitable recording medium or recording sheet can be employed, including plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, glossy coated papers such as XEROX® Digital Color Gloss, Sappi Warren Papers LUSTROGLOSS®, specialty papers such as Xerox® DURAPAPER®, and the like, transparency materials, fabrics, textile products, plastics, polymeric films, inorganic recording mediums such as metals and wood, and the like.

The ultraviolet curable phase change gellant ink herein have little to no penetration into the packaging substrate, residing primarily on the surface of the packaging substrate, thereby enhancing creation of a textured surface. The gel nature of the ink at room temperature prevents spread or migration of the printed droplet and enables facile formation of the raised tactile image or text. Both normal and raised tactile print can be generated on the same substrate, using the same ink material. The present cured inks are extremely robust materials.

The image areas can be cured at any time in the process. In embodiments, when multiple layers of the ink are successively deposited at tactile image areas, the layers can be cured upon completion of deposition of a last of the multiple layers. In another embodiment, each layer of the ink can be cured prior to the deposition of a subsequent layer.

The present ultraviolet curable gellant ink materials, as well as the methods herein, may be employed with any desired printing system suitable for depositing the ink in an imagewise pattern directly to an image receiving packaging substrate or to an intermediate transfer member, such as ink jet printing, thermal ink jet printing, piezoelectric ink jet printing, acoustic ink jet printing, thermal transfer printing, gravure printing, electro-statographic printing methods, and the like.

In a specific embodiment, an ink jet printing device as described in commonly assigned, co-pending U.S. Patent Application of Gabriel If time et al, Serial Number 11/683,011, entitled "Dual Printer for Regular and Raised Print," filed March 7, 2007 can be selected that includes at least an ink jet print head and a print region surface toward which ink is jetted from the ink jet print head, wherein a height distance between the ink jet print head and the print region surface is adjustable.

In specific embodiments herein, the ink comprises an ultra-violet curable phase change ink composition comprising an optional colorant and a phase change ink vehicle comprising at least one radiation curable monomer or prepolymer; a photoinitiator; a reactive wax; and a gellant.

In specific embodiments, the ink vehicles disclosed herein can comprise any suitable curable monomer or prepolymer. Examples of suitable materials include radically curable monomer compounds, such as acrylate and methacrylate monomer compounds, which are suitable for use as phase change ink carriers. Specific examples of relatively nonpolar acrylate and methacrylate monomers include (but are not limited to) isobornyl acrylate, isobornyl methacrylate, lauryl acrylate, lauryl methacrylate, isodecylacrylate, isodecylmethacrylate, caprolactone acrylate, 2-phenoxyethyl acrylate, isooctylacrylate, isooctylmethacrylate, butyl acrylate, and the like, as well as mixtures and combinations thereof. In addition, multifunctional acrylate and methacrylate monomers and oligomers can be included in the phase change ink carrier as reactive diluents and as materials that can increase the crosslink density of the cured image, thereby enhancing the toughness of the cured images. Examples of suitable multifunctional acrylate and methacrylate monomers and oligomers include (but are not limited to) pentaerythritol tetraacrylate, pentaerythritol tetramethacrylate, 1,2-ethylene glycol diacrylate, 1,2-ethylene glycol dimethacrylate, 1,6-hexanediol diacrylate, 1,6-hexanediol dimethacrylate, 1,12-dodecanol diacrylate, 1,12-dodecanol dimethacrylate, tris(2-hydroxy ethyl) isocyanurate triacrylate, propoxylated neopentyl glycol diacrylate (available from Sartomer Co. Inc. as SR 9003), hexanediol diacrylate, tripropylene glycol diacrylate, dipropylene glycol diacrylate, amine modified polyether acrylates (available as PO 83 F, LR 8869, and/or LR 8889 (all available from BASF Corporation), trimethylolpropane triacrylate, glycerol propoxylate triacrylate, dipentaerythritol pentaacrylate, dipentaerythritol hexaacrylate, ethoxylated pentaerythritol tetraacrylate (available from Sartomer Co. Inc. as SR 494), and the like, as well as mixtures and combinations thereof. When a reactive diluent is added to the ink carrier material, the reactive diluent is added in any desired or effective amount, in one embodiment at least 1 percent by weight of the carrier, and in another embodiment at least 35 percent by weight of the carrier, and in one embodiment no more than 80 percent by weight of the carrier, and in another embodiment no more than 70 percent by weight of the carrier, although the amount of diluent can be outside of these ranges.

In embodiments, the ink vehicles contain at least one compound that can exhibit gel-like behavior in that it undergoes a relatively sharp increase in viscosity over a relatively narrow temperature range when dissolved in a liquid such as those compounds that behave as curable monomers when exposed to radiation such as ultraviolet light. One example of such a liquid curable monomer is a propoxylated neopentyl glycol diacrylate such as SR9003, commercially available from Sartomer Co. Inc.

In one embodiment, some compounds as disclosed herein undergo a change in viscosity of at least 10³ centipoise, in another embodiment at least 10⁴ centipoise, and in yet another embodiment at least 10⁵ centipoise over a temperature range of in one embodiment at least 30°C, in another embodiment at least 10°C, and in yet another embodiment at least 5°C, although the viscosity change and temperature range can be outside of these ranges, and compounds that do not undergo changes within these ranges are also included herein.

At least some embodiments of the compounds disclosed herein can form a semi-solid gel at a first temperature. For example, when the compound is incorporated into a phase change ink, this temperature is below the specific temperature at which the ink is jetted. The semi-solid gel phase is a physical gel that exists as a dynamic equilibrium comprising one or more solid gellant molecules and a liquid solvent. The semi-solid gel phase is a dynamic networked assembly of molecular components held together by non-covalent interactions such as hydrogen bonding, Van der Waals interactions, aromatic non-bonding interactions, ionic or coordination bonding, London dispersion forces, or the like, which, upon stimulation by physical forces, such as temperature, mechanical agitation, or the like, or chemical forces, such as pH, ionic strength, or the like, can undergo reversible transitions from liquid to semi-solid state at the macroscopic level. The solutions containing the gellant molecules exhibit a thermally reversible transition between the semi-solid gel state and the liquid state when the temperature is varied above or below the gel point of the solution. This reversible cycle of transitioning between semi-solid gel phase and liquid phase can be repeated many times in the solution formulation.

In specific embodiments, the ink vehicles disclosed herein can comprise any suitable photoinitiator. Examples of specific initiators include, but are not limited to, Irgacure® 127, Irgacure® 379, and Irgacure® 819, all commercially available from Ciba Specialty Chemicals, among others. Further examples of suitable initiators include (but are not limited to) benzophenones, benzophenone derivatives, benzyl ketones, α-alkoxy benzyl ketones, monomeric hydroxyl ketones, polymeric hydroxyl ketones, α-amino ketones, alkoxy ketones, acyl phosphine oxides, metallocenes, benzoin ethers, benzil ketals, α-hydroxyalkylphenones, α-aminoalkylphenones, acylphosphine photoinitiators sold under the trade designations of IRGACURE® and DAROCUR® from Ciba, and the like. Specific examples include 1-hydroxy-cyclohexylphenylketone, benzophenone, 2-benzyl-2-(dimethylamino)-1-(4-(4-morphorlinyl)phenyl)-1-butanone, 2-methyl-1-(4-methylthio)phenyl-2-(4-morphorlinyl)-1-propanone, diphenyl-(2,4,6-trimethylbenzoyl) phosphine oxide, phenyl bis(2,4,6-trimethylbenzoyl) phosphine oxide, benzyl-dimethylketal, isopropylthioxanthone, 2,4,6-trimethylbenzoyldiphenylphosphine oxide (available as BASF LUCIRIN® TPO), 2,4,6-trimethylbenzoylethoxyphenylphosphine oxide (available as BASF LUCIRIN® TPO-L), bis(2,4,6-trimethylbenzoyl)-phenyl-phosphine oxide (available as Ciba IRGACURE® 819) and other acyl phosphines, 2-methyl-1-(4-methylthio)phenyl-2-(4-morphorlinyl)-1-propanone (available as Ciba IRGACURE® 907) and 1-(4-(2-hydroxyethoxy)phenyl)-2-hydroxy-2-methylpropan-1-one (available as Ciba IRGACURE® 2959), 2-benzyl 2-dimethylamino 1-(4-morpholinophenyl) butanone-1 (available as Ciba IRGACURE® 369), 2-hydroxy-1-(4-(4-(2-hydroxy-2-methylpropionyl)-benzyl)-phenyl)-2-methylpropan-1-one (available as Ciba IRGACURE® 127), 2-dimethylamino-2-(4-methylbenzyl)-1-(4-morpholin-4-ylphenyl)-butanone (available as Ciba IRGACURE® 379), titanocenes, isopropylthioxanthone, 1-hydroxy-cyclohexylphenylketone, benzophenone, 2,4,6-trimethylbenzophenone, 4-methylbenzophenone, diphenyl-(2,4,6-trimethylbenzoyl) phosphine oxide, 2,4,6-trimethylbenzoylphenylphosphinic acid ethyl ester, oligo(2-hydroxy-2-methyl-1-(4-(1-methylvinyl)phenyl) propanone), 2-hydroxy-2-methyl-1-phenyl-1-propanone, benzyl-dimethylketal, arylsulphonium slats, aryl iodonium salt, and the like, as well as mixtures thereof.

Optionally, the phase change inks can also contain an amine synergist, which are co-initiators which can donate a hydrogen atom to a photoinitiator and thereby form a radical species that initiates polymerization, and can also consume dissolved oxygen, which inhibits free-radical polymerization, thereby increasing the speed of polymerization. Examples of suitable amine synergists include (but are not limited to) ethyl-4-dimethylaminobenzoate, 2-ethylhexyl-4-dimethylaminobenzoate, and the like, as well as mixtures thereof.

Initiators for inks disclosed herein can absorb radiation at any desired or effective wavelength, in one embodiment at least 200 nanometers, and in one embodiment no more than 560 nanometers, and in another embodiment no more than 420 nanometers, although the wavelength can be outside of these ranges.

Optionally, the photoinitiator is present in the phase change ink in any desired or effective amount, in one embodiment at least 0.5 percent by weight of the ink composition, and in another embodiment at least 1 percent by weight of the ink composition, and in one embodiment no more than 15 percent by weight of the ink composition, and in another embodiment no more than 10 percent by weight of the ink composition, although the amount can be outside of these ranges.

Any suitable reactive wax can be used for the phase change in vehicles disclosed herein. In embodiments, the reactive wax comprises a curable wax component that is miscible with the other components and that will polymerize with the curable monomer to form a polymer. Inclusion of the wax promotes an increase in viscosity of the ink as it cools from the jetting temperature.

Suitable examples of waxes include, but are not limited to, those that are functionalized with curable or polymerizable groups. The curable groups may include, but are not limited to, acrylate, methacrylate, alkene, allylic ether, epoxide and oxetane. These waxes can be synthesized by the reaction of a wax equipped with a transformable functional group, such as carboxylic acid or hydroxyl.

In embodiments, the reactive wax is a hydroxyl-terminated polyethylene wax functionalized with a polymerizable group. Suitable examples of hydroxyl-terminated polyethylene waxes that may be functionalized with a curable group include, but are not limited to, mixtures of carbon chains with the structure CH₃-(CH₂)ₙ-CH₂OH, where there is a mixture of chain lengths, n, where the average chain length is in selected embodiments in the range of 16 to 50, and linear low molecular weight polyethylene, of similar average chain length. Suitable examples of such waxes include, but are not limited to, UNILIN® 350, UNILIN® 425, UNILIN® 550 and UNILIN® 700 with Mn approximately equal to 375, 460, 550 and 700 g/mol, respectively. All of these waxes are commercially available from Baker-Petrolite. Guerbet alcohols, characterized as 2,2-dialkyl-1-ethanols, are also suitable compounds. Specific embodiments of Guerbet alcohols include those containing 16 to 36 carbons, many of which are commercially available from Jarchem Industries Inc., Newark, NJ. In embodiments, PRIPOL® 2033 is selected, PRIPOL® 2033 being a C-36 dimer diol mixture including isomers of the formula 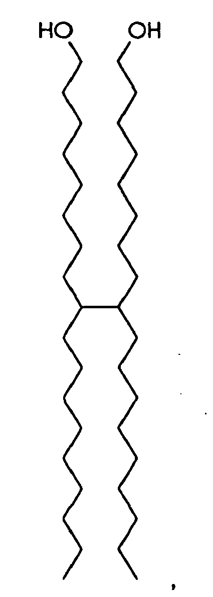 as well as other branched isomers which may include unsaturations and cyclic groups, available from Uniqema, New Castle, DE. Further information on C36 dimer diols of this type is disclosed in, for example, "Dimer Acids," Kirk-Othmer Encyclopedia of Chemical Technology, Vol, 8, 4th Ed. (1992), pp. 223 to 237. These alcohols can be reacted with carboxylic acids equipped with UV curable moieties to form reactive esters. Examples of these acids include, but are not limited to, acrylic and methacrylic acids, available from Sigma-Aldrich Co. Specific curable monomers include acrylates of UNILIN® 350, UNILIN® 425, UNILIN® 550 and UNILIN® 700.

Suitable examples of carboxylic acid-terminated polyethylene waxes that may be functionalized with a curable group include, but are not limited to, mixtures of carbon chains with the structure CH₃-(CH₂)ₙ-COOH, where there is a mixture of chain lengths, n, where the average chain length is in selected embodiments in the range of 16 to 50, and linear low molecular weight polyethylene, of similar average chain length. Suitable examples of such waxes include, but are not limited to, UNICID® 350, UNICID® 425, UNICID® 550 and UNICID® 700 with Mn equal to approximately 390, 475, 565 and 720 g/mol, respectively. Other suitable waxes have a structure CH₃-(CH₂)ₙ-COOH, such as hexadecanoic or palmitic acid with n=14, heptadecanoic or margaric or daturic acid with n=15, octadecanoic or stearic acid with n=16, eicosanoic or arachidic acid with n=18, docosanoic or behenic acid with n=20, tetracosanoic or lignoceric acid with n=22, hexacosanoic or cerotic acid with n=24, heptacosanoic or carboceric acid with n=25, octacosanoic or montanic acid with n=26, triacontanoic or melissic acid with n=28, dotriacontanoic or lacceroic acid with n=30, tritriacontanoic or ceromelissic or psyllic acid, with n=31, tetratriacontanoic or geddic acid with n=32, pentatriacontanoic or ceroplastic acid with n=33. Guerbet acids, characterized as 2,2-dialkyl ethanoic acids, are also suitable compounds. Selected Guerbet acids include those containing 16 to 36 carbons, many of which are commercially available from Jarchem Industries Inc., Newark, NJ. PRIPOL® 1009 (C-36 dimer acid mixture including isomers of the formula 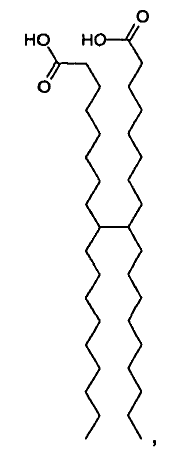 as well as other branched isomers which may include unsaturations and cyclic groups, available from Uniqema, New Castle, DE; further information on C36 dimer acids of this type is disclosed in, for example, "Dimer Acids," Kirk-Othmer Encyclopedia of Chemical Technology, Vol. 8, 4th Ed. (1992), pp. 223 to 237) can also be used. These carboxylic acids can be reacted with alcohols equipped with UV curable moieties to form reactive esters. Examples of these alcohols include, but are not limited to, 2-allyloxyethanol from Sigma-Aldrich Co.; 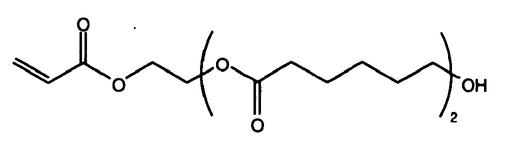 SR495B from Sartomer Company, Inc.; 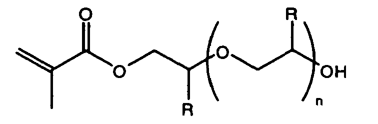 CD572 (R = H, n = 10) and SR604 (R = Me, n = 4) from Sartomer Company, Inc.

In embodiments, the optional curable wax is included in the ink in an amount of from, for example, about 1 to about 25% by weight of the ink, or from about 2 to about 20% by weight of the ink, or from about 2.5 to about 15% by weight of the ink, although the amounts can be outside of these ranges.

The curable monomer or prepolymer and curable wax together can form more than about 50% by weight of the ink, or at least 70% by weight of the ink, or at least 80% by weight of the ink, although not limited.

Any suitable gellant can be used for the ink vehicles disclosed herein. In embodiments, a gellant such as described in U. S. Patent Application Serial No. 11/290,202, filed November 30, 2005, entitled "Phase Change Inks Containing Photoinitiator With Phase Change Properties and Gellant Affinity," with the named inventors Peter G. Odell, Eniko Toma, and Jennifer L. Belelie, can be used, wherein the gellant is a compound of the formula 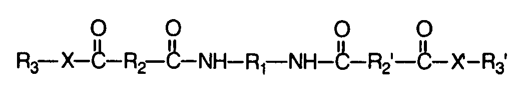 wherein R₁ is:
(i) an alkylene group (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), in one embodiment with at least 1 carbon atom, and in one embodiment with no more than 12 carbon atoms, in another embodiment with no more than 4 carbon atoms, and in yet another embodiment with no more than 2 carbon atoms, although the number of carbon atoms can be outside of these ranges,
(ii) an arylene group (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), in one embodiment with at least 5 carbon atoms, and in another embodiment with at least 6 carbon atoms, and in one embodiment with no more than 14 carbon atoms, in another embodiment with no more than 10 carbon atoms, and in yet another embodiment with no more than 6 carbon atoms, although the number of carbon atoms can be outside of these ranges,
(iii) an arylalkylene group (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, or
(iv) an alkylarylene group (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, wherein the substituents on the substituted alkylene, arylene, arylalkylene, and alkylarylene groups can be (but are not limited to) halogen atoms, cyano groups, pyridine groups, pyridinium groups, ether groups, aldehyde groups, ketone groups, ester groups, amide groups, carbonyl groups, thiocarbonyl groups, sulfide groups, nitro groups, nitroso groups, acyl groups, azo groups, urethane groups, urea groups, mixtures thereof, and the like, wherein two or more substituents can be joined together to form a ring;
R₂ and R₂' each, independently of the other, are:
(i) alkylene groups (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), in one embodiment with at least 1 carbon atom, and in one embodiment with no more than 54 carbon atoms, and in another embodiment with no more than 36 carbon atoms, although the number of carbon atoms can be outside of these ranges,
(ii) arylene groups (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), in one embodiment with at least 5 carbon atoms, and in another embodiment with at least 6 carbon atoms, and in one embodiment with no more than 14 carbon atoms, in another embodiment with no more than 10 carbon atoms, and in yet another embodiment with no more than 7 carbon atoms, although the number of carbon atoms can be outside of these ranges,
(iii) arylalkylene groups (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 8 carbon atoms, although the number of carbon atoms can be outside of these ranges, or
(iv) alkylarylene groups (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, wherein the substituents on the substituted alkylene, arylene, arylalkylene, and alkylarylene groups can be (but are not limited to) halogen atoms, cyano groups, ether groups, aldehyde groups, ketone groups, ester groups, amide groups, carbonyl groups, thiocarbonyl groups, phosphine groups, phosphonium groups, phosphate groups, nitrile groups, mercapto groups, nitro groups, nitroso groups, acyl groups, acid anhydride groups, azide groups, azo groups, cyanato groups, urethane groups, urea groups, mixtures thereof, and the like, wherein two or more substituents can be joined together to form a ring;
R₃ and R₃' each, independently of the other, are either:
(a) photoinitiating groups, such as groups derived from 1-(4-(2-hydroxyethoxy)phenyl)-2-hydroxy-2-methylpropan-1-one, of the formula 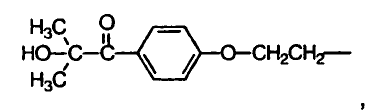 groups derived from 1-hydroxycyclohexylphenylketone, of the formula 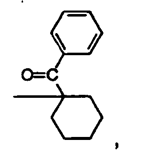 groups derived from 2-hydroxy-2-methyl-1-phenylpropan-1-one, of the formula 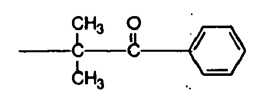 groups derived from *N,N*-dimethylethanolamine or *N,N-*dimethylethylenediamine, of the formula 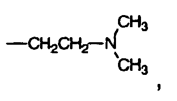 or the like, or:
(b) a group which is:
   (i) an alkyl group (including linear and branched, saturated and unsaturated, cyclic and acyclic, and substituted and unsubstituted alkyl groups, and wherein heteroatoms, such as oxygen, nitrogen, sulfur, silicon, phosphorus, boron, and the like either may or may not be present in the alkyl group), in one embodiment with at least 2 carbon atoms, in another embodiment with at least 3 carbon atoms, and in yet another embodiment with at least 4 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges,
   (ii) an aryl group (including substituted and unsubstituted aryl groups, and wherein heteroatoms, such as oxygen, nitrogen, sulfur, silicon, phosphorus, boron, and the like either may or may not be present in the aryl group), in one embodiment with at least 5 carbon atoms, and in another embodiment with at least 6 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as phenyl or the like,
   (iii) an arylalkyl group (including substituted and unsubstituted arylalkyl groups, wherein the alkyl portion of the arylalkyl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkyl group), in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as benzyl or the like, or
   (iv) an alkylaryl group (including substituted and unsubstituted alkylaryl groups, wherein the alkyl portion of the alkylaryl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylaryl group), in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as tolyl or the like, wherein the substituents on the substituted alkyl, arylalkyl, and alkylaryl groups can be (but are not limited to) halogen atoms, ether groups, aldehyde groups, ketone groups, ester groups, amide groups, carbonyl groups, thiocarbonyl groups, sulfide groups, phosphine groups, phosphonium groups, phosphate groups, nitrile groups, mercapto groups, nitro groups, nitroso groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring;
   provided that at least one of R₃ and R₃' is a photoinitiating group;
   and X and X' each, independently of the other, is an oxygen atom or a group of the formula -NR₄-, wherein R₄ is:
   (i) a hydrogen atom;
   (ii) an alkyl group, including linear and branched, saturated and unsaturated, cyclic and acyclic, and substituted and unsubstituted alkyl groups, and wherein heteroatoms either may or may not be present in the alkyl group, in one embodiment with at least 1 carbon atom, and in one embodiment with no more than 100 carbon atoms, in another embodiment with no more than 60 carbon atoms, and in yet another embodiment with no more than 30 carbon atoms, although the number of carbon atoms can be outside of these ranges,
   (iii) an aryl group, including substituted and unsubstituted aryl groups, and wherein heteroatoms either may or may not be present in the aryl group, in one embodiment with at least 5 carbon atoms, and in another embodiment with at least 6 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges,
   (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, or
   (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, wherein the substituents on the substituted alkyl, aryl, arylalkyl, and alkylaryl groups can be (but are not limited to) halogen atoms, ether groups, aldehyde groups, ketone groups, ester groups, amide groups, carbonyl groups, thiocarbonyl groups, sulfate groups, sulfonate groups, sulfonic acid groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring.

In one specific embodiment, R₂ and R₂' are the same as each other; in another specific embodiment, R₂ and R₂' are different from each other. In one specific embodiment, R₃ and R₃' are the same as each other; in another specific embodiment, R₃ and R₃' are different from each other.

In one specific embodiment, R₂ and R₂' are each groups of the formula -C₃₄H₅₆₊ₐ- and are branched alkylene groups which may include unsaturations and cyclic groups, wherein a is an integer of 0, 1, 2, 3, 4, 5, 6, 7, 8, 9, 10, 11, or 12, including (but not limited to) isomers of the formula

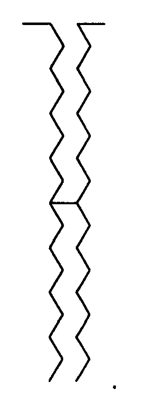

In one specific embodiment, R₁ is an ethylene (-CH₂CH₂-) group.

In one specific embodiment, R₃ and R₃' are both

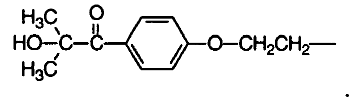

In one specific embodiment, the compound is of the formula 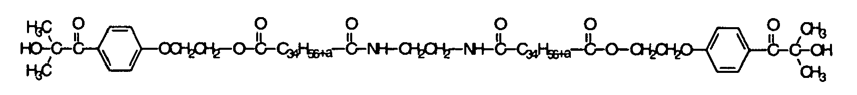 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12, including (but not limited to) isomers of the formula 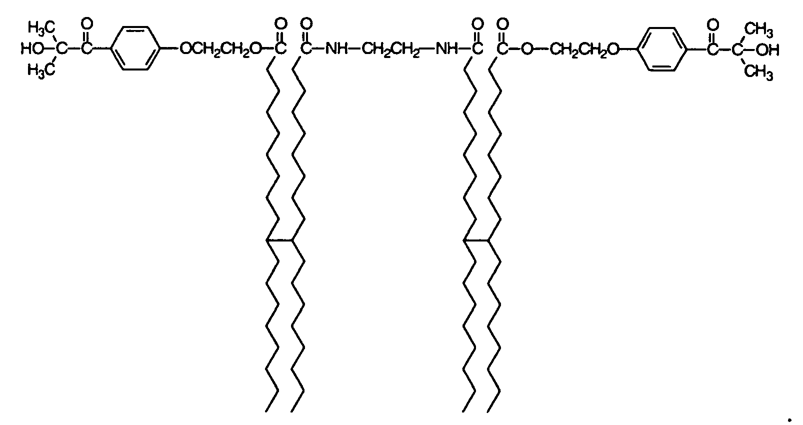 Additional specific examples of compounds of this formula include those of the formula 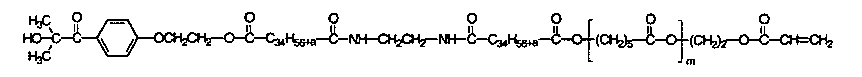 or 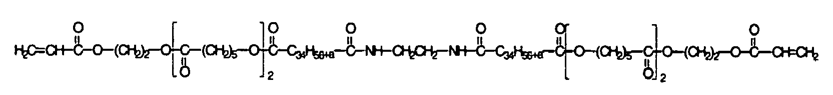 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein m is an integer, including but not limited to embodiments wherein m is 2, including (but not limited to) isomers of the formula 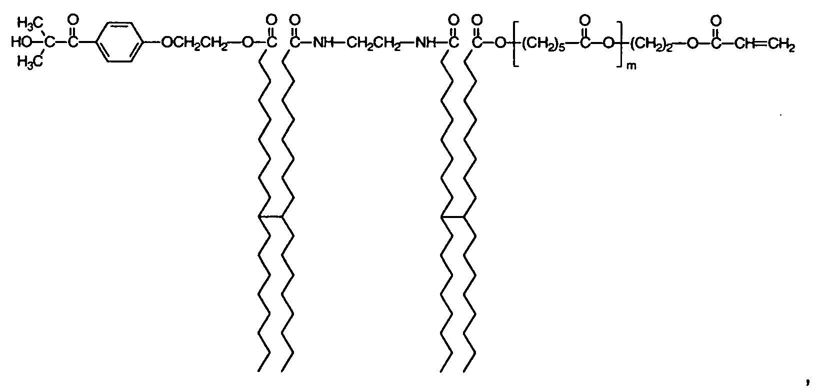 those of the formula 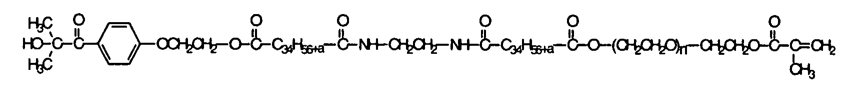 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein n is an integer, including but not limited to embodiments wherein n is 2 and wherein n is 5, including (but not limited to) isomers of the formula 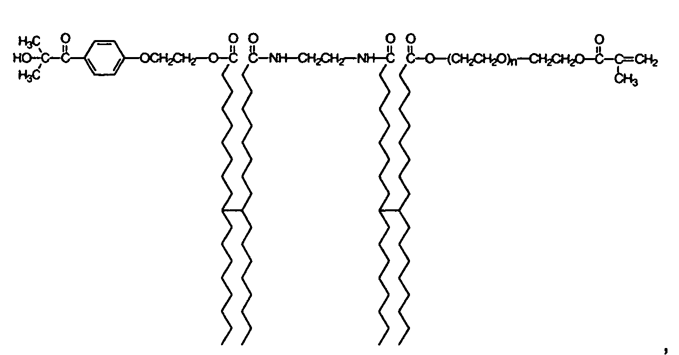 those of the formula 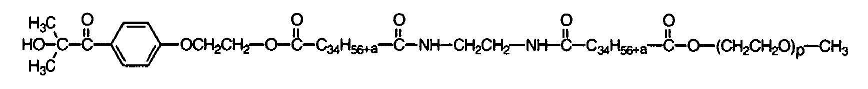 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein p is an integer, including but not limited to embodiments wherein p is 2 and wherein p is 3, including (but not limited to) isomers of the formula 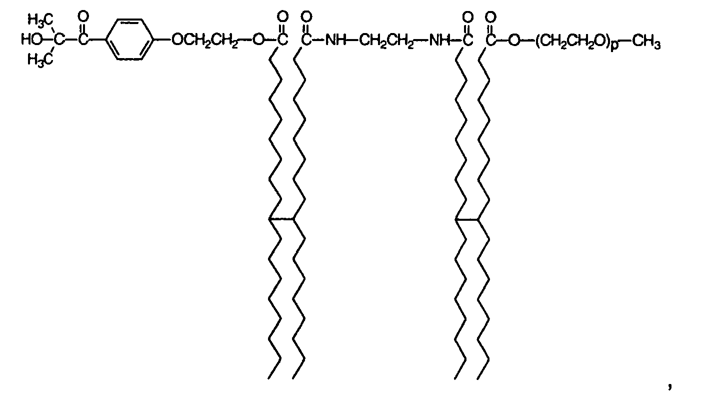 those of the formula 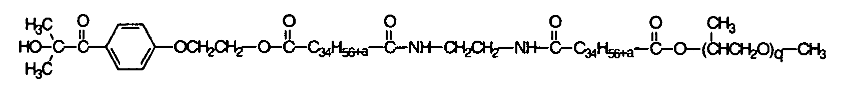 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein q is an integer, including but not limited to embodiments wherein q is 2 and wherein q is 3, including (but not limited to) isomers of the formula 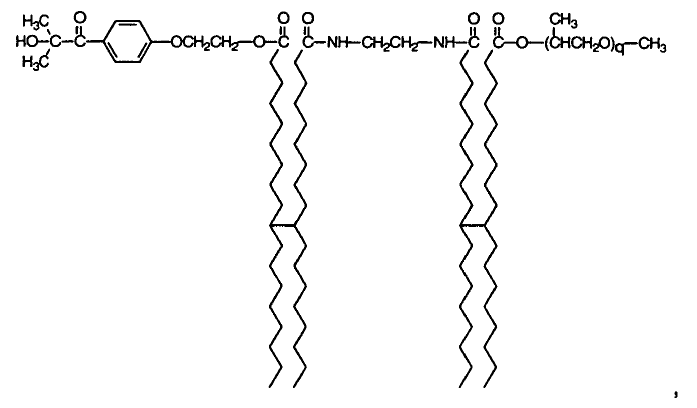 those of the formula 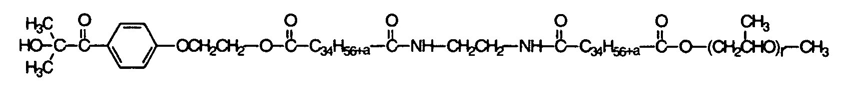 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein r is an integer, including but not limited to embodiments wherein r is 2 and wherein r is 3, including (but not limited to) isomers of the formula 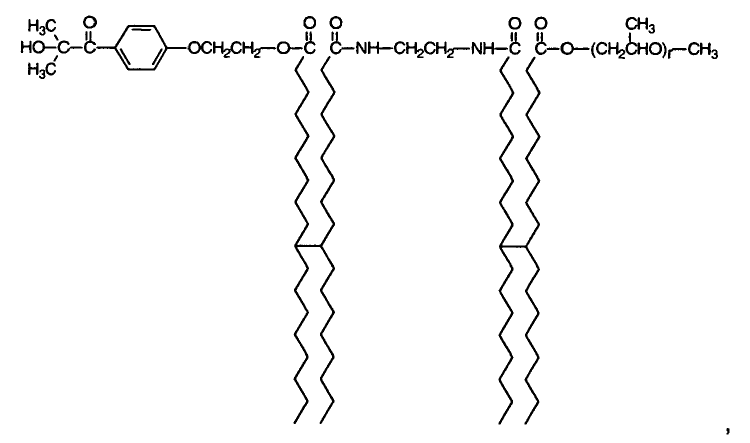 and the like, as well as mixtures thereof.
In embodiments, the gellant is a mixture of 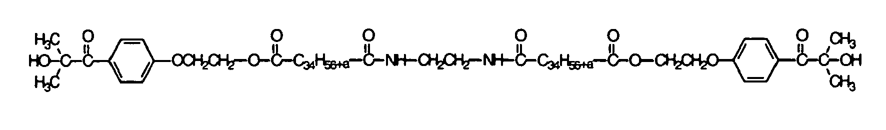 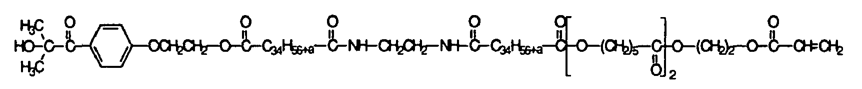 and 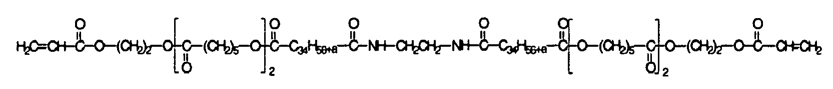 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.
In embodiments, gellants herein can comprise materials disclosed in co-pending Application U.S. Serial No. 11/290,121, filed November 30, 2005, entitled "Phase Change Inks Containing Curable Amide Gellant Compounds," with the named inventors Eniko Toma, Jennifer L. Belelie, and Peter G. Odell, including a compound of the formula 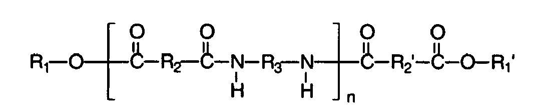 wherein R₁ and R₁' each, independently of the other, is an alkyl group having at least one ethylenic unsaturation, an arylalkyl group having at least one ethylenic unsaturation, or an alkylaryl group having at least one ethylenic unsaturation, R₂, R₂', and R₃ each, independently of the others, are alkylene groups, arylene groups, arylalkylene groups, or alkylarylene groups, and n is an integer representing the number of repeat amide units and is at least 1.
See also U. S. Patent 7,279,587 of Peter G. Odell, Eniko Toma, and Jennifer L. Belelie, entitled "Photoinitiator with Phase Change Properties and Gellant Affinity," which discloses photoinitiating compounds useful in curable phase change ink compositions and U.S. Patent 7,276,614 of Eniko Toma, Peter G. Odell, Adela Goredema, and Jennifer L. Belelie, entitled "Curable Amide Gellant Compounds," issued October 2, 2007.
The gellant compounds as disclosed herein can be prepared by any desired or effective method.
For example, in embodiments, gellants can be prepared as described in U. S. Patent 7,259,275, entitled "Method for Preparing Curable Amide Gellant Compounds," with the named inventors Jennifer L. Belelie, Adela Goredema, Peter G. Odell, and Eniko Toma, which describes a process for preparing a compound of the formula 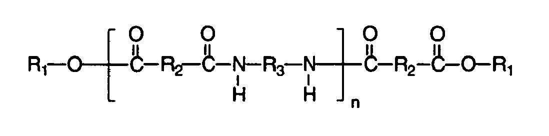 wherein R₁ is an alkyl group having at least one ethylenic unsaturation, an arylalkyl group having at least one ethylenic unsaturation, or an alkylaryl group having at least one ethylenic unsaturation, R₂ and R₃ each, independently of the others, are alkylene groups, arylene groups, arylalkylene groups, or alkylarylene groups, and n is an integer representing the number of repeat amide units and is at least 1, said process comprising: (a) reacting a diacid of the formula

HOOC-R₂-COOH

with a diamine of the formula 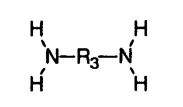 in the absence of a solvent while removing water from the reaction mixture to form an acid-terminated oligoamide intermediate; and (b) reacting the acid-terminated oligoamide intermediate with a monoalcohol of the formula

R₁-OH

in the presence of a coupling agent and a catalyst to form the product.
See also, U.S. Patent 7,279,587 of Jennifer L. Belelie, Adela Goredema, Peter G. Odell, and Eniko Toma entitled "Method for Preparing Curable Amide Gellant Compounds," issued August 21, 2007, describes, in embodiments, a process for preparing a compound of the formula 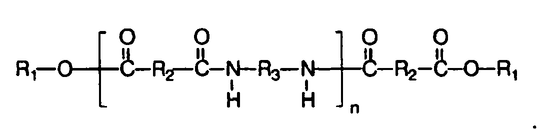 Further, see U.S. Patent 7,271,284 of Eniko Toma, Adela Goredema, Jennifer L. Belelie, and Peter G. Odell entitled "Process for Making Curable Amide Gellant Compounds," issued September 18, 2007 which describes, in embodiments, a process for preparing a compound of the formula 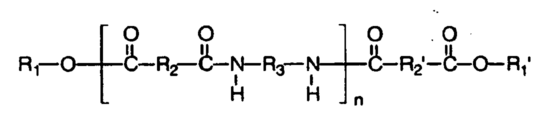 having substituents as defined therein.

The optional colorant, if present, may be present in a colored ink in any desired amount, for example from 0.5 to 75% by weight of the ink, for example from 1 to 50% or from 1 to 25%, by weight of the ink.

Any suitable colorant can be used in embodiments herein, including dyes, pigments, or combinations thereof. As colorants, examples may include any dye or pigment capable of being dispersed or dissolved in the vehicle. Examples of suitable pigments include, for example, Paliogen Violet 5100 (BASF); Paliogen Violet 5890 (BASF); Heliogen Green L8730 (BASF); Lithol Scarlet D3700 (BASF); SUNFAST® Blue 15:4 (Sun Chemical 249-0592); HOSTAPERM Blue B2G-D (Clariant); Permanent Red P-F7RK; HOSTAPERM Violet BL (Clariant); Lithol Scarlet 4440 (BASF); Bon Red C (Dominion Color Company); Oracet Pink RF (Ciba); Paliogen Red 3871 K (BASF); SUNFAST ® Blue 15:3 (Sun Chemical 249-1284); Paliogen Red 3340 (BASF); SUNFAST ® Carbazole Violet 23 (Sun Chemical 246-1670); Lithol Fast Scarlet L4300 (BASF); Sunbrite Yellow 17 (Sun Chemical 275-0023); Heliogen Blue L6900, L7020 (BASF); Sunbrite Yellow 74 (Sun Chemical 272-0558); SPECTRA PAC® C Orange 16 (Sun Chemical 276-3016); Heliogen Blue K6902, K6910 (BASF); SUNFAST® Magenta 122 (Sun Chemical 228-0013); Heliogen Blue D6840, D7080 (BASF); Sudan Blue OS (BASF); Neopen Blue FF4012 (BASF); PV Fast Blue B2GO1 (Clariant); Irgalite Blue BCA (Ciba); Paliogen Blue 6470 (BASF); Sudan Orange G (Aldrich); Sudan Orange 220 (BASF); Paliogen Orange 3040 (BASF); Paliogen Yellow 152, 1560 (BASF); Lithol Fast Yellow 0991 K (BASF); Paliotol Yellow 1840 (BASF); Novoperm Yellow FGL (Clariant); Lumogen Yellow D0790 (BASF); Suco-Yellow L1250 (BASF); Suco-Yellow D1355 (BASF); Suco Fast Yellow DI 355, DI 351 (BASF); Hostaperm Pink E 02 (Clariant); Hansa Brilliant Yellow 5GX03 (Clariant); Permanent Yellow GRL 02 (Clariant); Permanent Rubine L6B 05 (Clariant); Fanal Pink D4830 (BASF); Cinquasia Magenta (Du Pont), Paliogen Black L0084 (BASF); Pigment Black K801 (BASF); and carbon blacks such as REGAL 330™ (Cabot), Carbon Black 5250, Carbon Black 5750 (Columbia Chemical), mixtures thereof and the like. Examples of suitable dyes include Usharect Blue 86 (Direct Blue 86), available from Ushanti Color; Intralite Turquoise 8GL (Direct Blue 86), available from Classic Dyestuffs; Chemictive Brilliant Red 7BH (Reactive Red 4), available from Chemiequip; Levafix Black EB, available from Bayer; Reactron Red H8B (Reactive Red 31), available from Atlas Dye-Chem; D&C Red #28 (Acid Red 92), available from Warner-Jenkinson; Direct Brilliant Pink B, available from Global Colors; Acid Tartrazine, available from Metrochem Industries; Cartasol Yellow 6GF Clariant; Carta Blue 2GL, available from Clariant; and the like. Example solvent dyes include spirit soluble dyes such as Neozapon Red 492 (BASF); Orasol Red G (Ciba); Direct Brilliant Pink B (Global Colors); Aizen Spilon Red C-BH (Hodogaya Chemical); Kayanol Red 3BL (Nippon Kayaku); Spirit Fast Yellow 3G; Aizen Spilon Yellow C-GNH (Hodogaya Chemical); Cartasol Brilliant Yellow 4GF (Clariant); Pergasol Yellow CGP (Ciba); Orasol Black RLP (Ciba); Savinyl Black RLS (Clariant); Morfast Black Conc. A (Rohm and Haas); Orasol Blue GN (Ciba); Savinyl Blue GLS (Sandoz); Luxol Fast Blue MBSN (Pylam); Sevron Blue 5GMF (Classic Dyestuffs); Basacid Blue 750 (BASF), Neozapon Black X51 [C.I. Solvent Black, C.I. 12195] (BASF), Sudan Blue 670 [C.I. 61554] (BASF), Sudan Yellow 146 [C.I. 12700] (BASF), Sudan Red 462 [C.I. 260501] (BASF), mixtures thereof and the like.

The radiation curable phase change inks herein can also optionally contain an antioxidant. The optional antioxidants can protect the images from oxidation and can also protect the ink components from oxidation during the heating portion of the ink preparation process. Specific examples of suitable antioxidant stabilizers include (but are not limited to) NAUGARD® 524, NAUGARD® 635, NAUGARD® A, NAUGARDO I-403, and NAUGARD® 959, commercially available from Crompton Corporation, Middlebury, CT; IRGANOX® 1010 and IRGASTAB® UV 10, commercially available from Ciba Specialty Chemicals; GENORAD 16 and GENORAD 40 commercially available from Rahn AG, Zurich, Switzerland, and the like, as well as mixtures thereof. When present, the optional antioxidant is present in the ink in any desired or effective amount, in one embodiment at least about 0.01 percent by weight of the ink carrier, in another embodiment at least about 0.1 percent by weight of the ink carrier, and in yet another embodiment at least about 1 percent by weight of the ink carrier, and in one embodiment no more than about 20 percent by weight of the ink carrier, in another embodiment no more than about 5 percent by weight of the ink carrier, and in yet another embodiment no more than about 3 percent by weight of the ink carrier, although the amount can be outside of these ranges.

The radiation curable phase change inks can also, if desired, contain additives to take advantage of the known functionality associated with such additives. Such additives may include, for example, defoamers, slip and leveling agents, pigment dispersants, surfactants, and the like, as well as mixtures thereof. The inks can also include additional monomeric or polymeric materials as desired.

Curing of the ink can be effected by exposure of the ink image to actinic radiation at any desired or effective wavelength, in one embodiment at least about 200 nanometers, and one embodiment no more than about 480 nanometers, although the wavelength can be outside of these ranges. Exposure to actinic radiation can be for any desired or effective period of time, in one embodiment for at least 0.2 second, in another embodiment for at least 1 second, and in yet another embodiment for at least 5 seconds, and in one embodiment for no more than 30 seconds, and in another embodiment for no more than 15 seconds, although the exposure period can be outside of these ranges. By curing is meant that the curable compounds in the ink undergo an increase in molecular weight upon exposure to actinic radiation, such as (but not limited to) crosslinking, chain lengthening, or the like.

The ink compositions generally have melt viscosities at the jetting temperature (in one embodiment no lower than 50°C, in another embodiment no lower than 60°C, and in yet another embodiment no lower than 70°C, and in one embodiment no higher than 120°C, and in another embodiment no higher than 110°C, although the jetting temperature can be outside of these ranges) in one embodiment of no more than 30 centipoise, in another embodiment of no more than 20 centipoise, and in yet another embodiment of no more than 15 centipoise, and in one embodiment of no less than 2 centipoise, in another embodiment of no less than 5 centipoise, and in yet another embodiment of no less than 7 centipoise, although the melt viscosity can be outside of these ranges.

In one specific embodiment, the inks are jetted at temperatures below 100°C, in one embodiment from 40°C to 100°C, in another embodiment from 50°C to 100°C, and in yet another embodiment from 60°C to 90°C, although the jetting temperature can be outside of these ranges. At such low jetting temperatures, the conventional use of temperature differential between the jetted ink and the recording medium upon which the ink is jetted to effect a rapid phase change in the ink (i.e., from liquid to solid) may not be effective. The gellant can thus be used to effect a rapid viscosity increase in the jetted ink upon the recording medium. In particular, jetted ink droplets can be pinned into position on a receiving recording medium such as a final recording medium, such as paper or transparency material, or an intermediate transfer member, such as a transfuse drum or belt, that is maintained at a temperature cooler than the ink jetting temperature of the ink through the action of a phase change transition in which the ink undergoes a significant viscosity change from a liquid state to a gel state (or semi-solid state).

In some embodiments, the temperature at which the ink forms the gel state is any temperature below the jetting temperature of the ink, in one embodiment any temperature that is 5°C or more below the jetting temperature of the ink. In one embodiment, the gel state can be formed at a temperature of at least 25°C, and in another embodiment at a temperature of at least 30°C, and in one embodiment of no more than 100°C, in another embodiment of no more than 70°C, and in yet another embodiment of no more than 50°C, although the temperature can be outside of these ranges. A rapid and large increase in ink viscosity occurs upon cooling from the jetting temperature, at which the ink is in a liquid state, to the gel temperature, at which the ink is in the gel state. The viscosity increase is in one specific embodiment at least a 10^{2.5}-fold increase in viscosity.

A suitable gelling agent for the ink will gel the monomers/oligomers in the ink vehicle quickly and reversibly and will demonstrate a narrow phase change transition, for example within a temperature range of from 30°C to 100°C, preferably of from 30°C to 70°C, although the transition range can be outside of these temperature ranges. The gel state of the ink in one specific embodiment exhibits a minimum of 10^{2.5} centipoise, and in another specific embodiment 10³ centipoise, increase in viscosity at transferring temperatures, e.g., in one specific embodiment from 30°C to 70°C, compared to the viscosity at the jetting temperature. One specific embodiment is directed to gellant containing inks that rapidly increase in viscosity within from 5°C to 10°C below the jetting temperature and ultimately reach a viscosity above 10⁴ times the jetting viscosity, and in another embodiment 10⁵ times the jetting viscosity, although the viscosity can be outside of these ranges.

When the inks are in the gel state, the viscosity of the ink is in one embodiment at least 1,000 centipoise, in another embodiment at least 10,000 centipoise, and in yet another embodiment at least 100,000 centipoise, although the viscosity can be outside of these ranges. Viscosity values in the gel state are in one embodiment at least 10³ centipoise, and in another embodiment at least 10^{4.5} centipoise, and in one embodiment no more than 10⁹ centipoise, and in another embodiment no more than 10^{6.5} centipoise, although the gel state viscosity can be outside of these ranges. The preferred gel phase viscosity can vary with the print process. For example, the highest viscosities are preferred when jetting directly to porous paper in order to minimize the effects of ink bleed and feathering. On the other hand, less porous recording mediums such as plastic may lead to the use of lower ink viscosities that control dot gain and agglomeration of individual ink pixels. The gel viscosity can be controlled by ink formulation and recording medium temperature. An additional benefit of the gel state for radiation curable inks is that higher viscosities of 10³ to 10⁴ centipoise can reduce oxygen diffusion in the ink, which in turn can lead to a faster rate of cure in free radical initiation.

For printing applications wherein the ink is printed directly onto a substrate, the viscosity of the ink in one specific embodiment increases to 10⁵ centipoise or greater at the substrate temperature to prevent the ink from soaking into the substrate and/or to facilitate adhesion to the substrate until curing by exposure to radiation. In one specific embodiment, the temperature of the substrate onto which the ink is printed and at which the ink viscosity increases to 10⁵ centipoise or greater is 50°C or lower.

The ink compositions can be prepared by any desired or suitable method. For example, the ink ingredients can be mixed together, followed by heating, to a temperature in one embodiment of at least 80°C, and in one embodiment of no more than 100°C, although the temperature can be outside of these ranges, and stirring until a homogeneous ink composition is obtained, followed by cooling the ink to ambient temperature (typically from 20°C to 25°C). The inks are gels at ambient temperature.

The inks can be employed in apparatus for direct printing ink jet processes and in indirect (offset) printing ink jet applications. Another embodiment disclosed herein is directed to a process which comprises incorporating an ink as disclosed herein into an ink jet printing apparatus, melting the ink, and causing droplets of the melted ink to be ejected in an imagewise pattern onto a recording medium. A direct printing process is also disclosed in, for example, U.S. Patent 5,195,430. An offset or indirect printing process is also disclosed in, for example, U.S. Patent 5,389,958. In one specific embodiment, the printing apparatus employs a piezoelectric printing process wherein droplets of the ink are caused to be ejected in imagewise pattern by oscillations of piezoelectric vibrating elements. Inks as disclosed herein can also be employed in other hot melt printing processes, such as hot melt acoustic ink jet printing, hot melt thermal ink jet printing, hot melt continuous stream or deflection ink jet printing, and the like. Phase change inks as disclosed herein can also be used in printing processes other than hot melt ink jet printing processes.

In a specific embodiment, the ultra-violet curable phase change gellant inks herein are employed in an ink jet printing device comprising an ink jet print head and a print region surface toward which ink is jetted from the ink jet print head, wherein a height distance between the ink jet print head and the print region surface is adjustable; wherein the ink jet print head jets an ultra-violet curable phase change ink composition as described herein.

### EXAMPLES

The following Examples are being submitted to further define various species of the present disclosure. These Examples are intended to be illustrative only and are not intended to limit the scope of the present disclosure. Also, parts and percentages are by weight unless otherwise indicated.

### Example 1

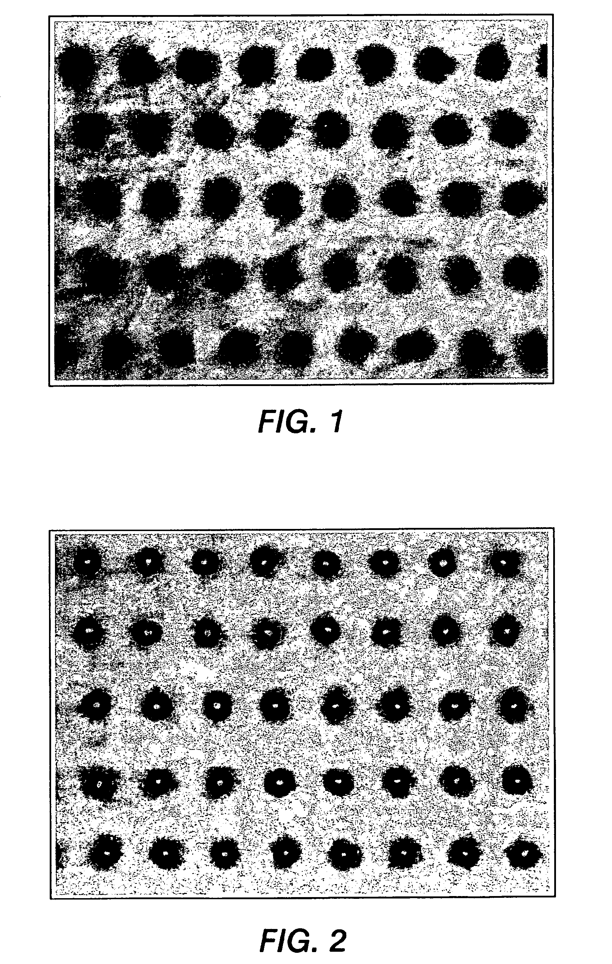

An ultra-violet curable phase change gellant ink was prepared containing 7.5 percent by weight curable amide gellant as described in Example VIII of U. S. Patent 7,279,587, 5 percent by weight Unilin 350™ acrylate 5 percent by weight pentafunctional acrylate monomer (SR 399LV dipentaerythritol pentaacrylate available from Sartomer Co., Inc.), 52.8 percent by weight difunctional acrylate monomer (propoxylated neopentyl glycol diacrylate SR 9003 available from Sartomer Co., Inc.), 3 percent by weight IRGACURE® 379 photoinitiator (obtained from Ciba Specialty Chemicals), 1 percent by weight IRGACURE® 819 photoinitiator (obtained from Ciba Specialty Chemicals), 3.5 percent by weight IRGACURE® 127 photoinitiator (obtained from Ciba Specialty Chemicals), 2 percent by weight DAROCUR® ITX photoinitiator (obtained from Ciba Specialty Chemicals), and 0.2 percent by weight UV stabilizer (IRGASTAB® UV10, obtained from Ciba Specialty Chemicals). All of the components were stirred together at 90°C for 1 hour. The above described solution at 90°C was added slowly dropwise to 20 percent by weight cyan pigment dispersion (comprising 15 percent by weight cyan pigment (obtained from Sun Chemicals), 3 percent by weight pigment dispersant (obtained from Ciba Specialty Chemicals) and 82 percent by weight SR9003 (obtained from Sartomer Co., Inc.)), with stirring at 90°C. After the addition was complete, all of the components were stirred together at 90°C for 2 hours.
Cyan dots were generated digitally using an piezoelectric inkjet printer to print about 21 nanogram drops at 150 dots per inch (cross process direction) times 200 dots per inch (process direction) with the printhead held at 75 °C. Figure 1 shows the cured dots printed on substrates as follows.

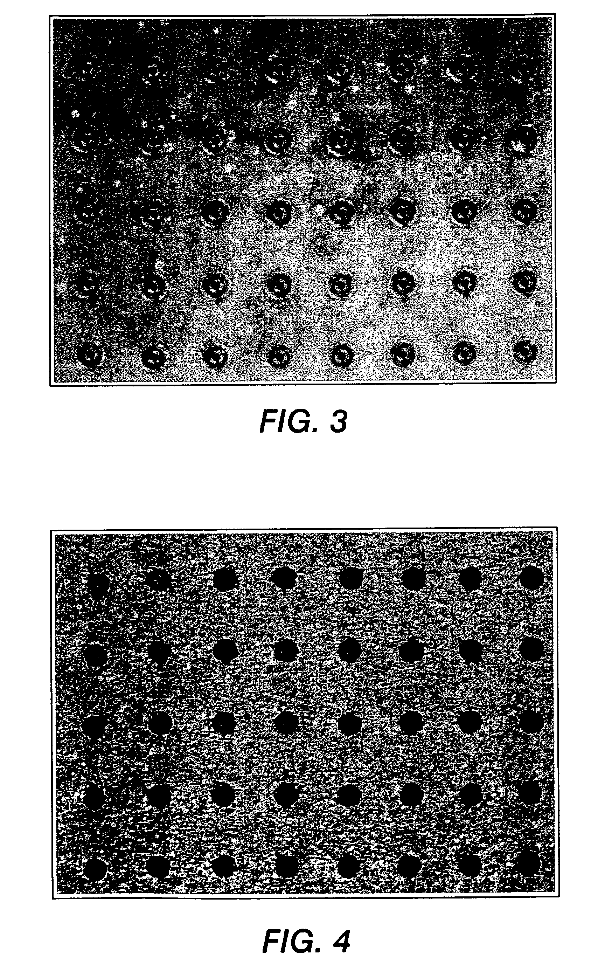

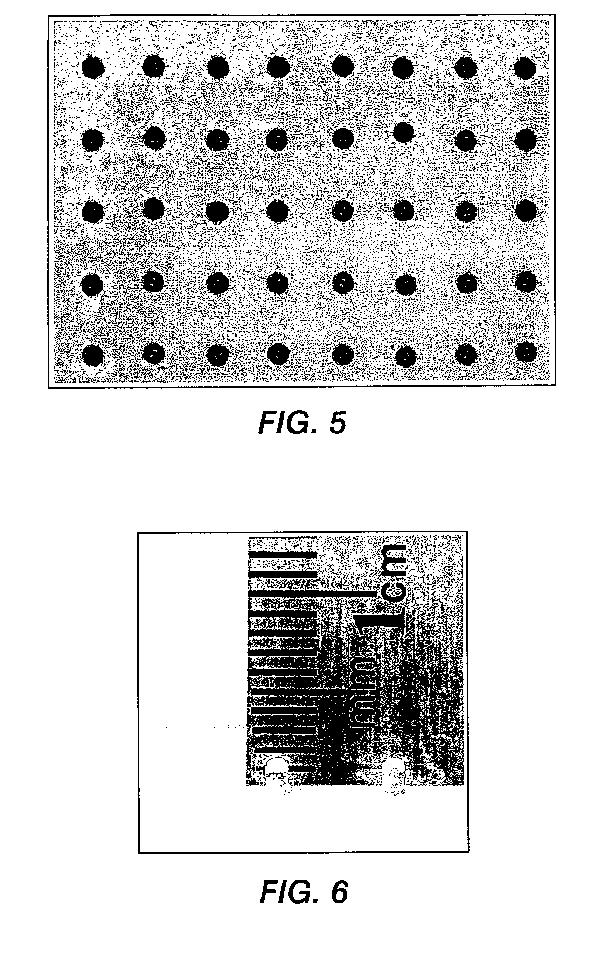

Figure 1: plain paper (Xerox® Color Xpressions® Plus); Figure 2: glossy coated paper (McCoy Text Gloss coated paper): Figure 3: 12 micron polyester (Melinex® 813); Figure 4: 40 micron aluminum foil; Figure 5: 43 micron polypropylene (OPPalyte® ASW 250). After printing, the dots were cured by exposure to UV light from a UV Fusion LC-6B Benchtop Conveyor equipped with UV Fusion Light Hammer 6 Ultraviolet Lamp System employing a "D" bulb for a minimum of 1 second.

### Example 2

An ultra-violet curable phase change gellant ink was prepared containing 7.5 percent by weight curable amide gellant as described in Example VIII of U. S. Patent 7,279,587, 5 percent by weight Unilin 350™ acrylate wax prepared as described in U. S. Patent Publication 2007120925, 5 percent by weight pentafunctional acrylate monomer (SR 399LV dipentaerythritol pentaacrylate available from Sartomer Co., Inc.), 72.8 percent by weight difunctional acrylate monomer (propoxylated neopentyl glycol diacrylate SR 9003 available from Sartomer Co., Inc.), 3 percent by weight IRGACURE® 379 photoinitiator (obtained from Ciba Specialty Chemicals), 1 percent by weight IRGACURE® 819 photoinitiator (obtained from Ciba Specialty Chemicals), 3.5 percent by weight IRGACURE® 127 photoinitiator (obtained from Ciba Specialty Chemicals), and 2 percent by weight DAROCUR® ITX photoinitiator (obtained from Ciba Specialty Chemicals), and 0.2 percent by weight UV stabilizer (IRGASTAB® UV10, obtained from Ciba Specialty Chemicals). All of the components were stirred together at 90°C for 1 hour.
Free standing structures having a height of about 1.7 millimeters as shown in Figure 2 were jetted onto a room temperature Mylar® substrate using a Xerox Phaser® 860 piezoelectric inkjet printer having the printhead oriented horizontal to the substrate. Every third jet was fired resulting in 5.5 millimeter spacing between the two structures shown in Figure 2. After printing, the structures were cured by exposure to UV light from a UV Fusion LC-6B Benchtop Conveyor equipped with UV Fusion Light Hammer 6 Ultraviolet Lamp System employing a "D" bulb for a minimum of 1 second.
It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims. Unless specifically recited in a claim, steps or components of claims should not be implied or imported from the specification or any other claims as to any particular order, number, position, size, shape, angle, color, or material.

## Claims

1. A method for forming tactile images or a combination of tactile and regular images on a flexible packaging substrate comprising:
depositing an ultraviolet curable phase change ink composition comprising an optional colorant and a phase change ink vehicle comprising a radiation curable monomer or prepolymer; a photoinitiator; a reactive wax; and a gellant directly onto a flexible packaging substrate or depositing the ink onto an intermediate transfer member, in an image area to form a tactile image area or a combination of tactile image area and regular image;
forming the tactile image by depositing multiple layers of the ink in locations of the tactile image area or portion thereof;
when an intermediate transfer member is used, transferring the deposited ink from the intermediate transfer member to the flexible packaging substrate; and
curing the ink,
wherein the tactile image area or a portion thereof has a raised print height of 30 micrometers to 1 millimeter.

2. The method according to claim 1, wherein the at least one curable monomer or prepolymer is a multifunctional acrylate or methacrylate compound.

3. The method according to claim 2, wherein the multifunctional acrylate or methacrylate compound is propoxylated neopentyl glycol diacrylate, pentaerythritol tetraacrylate, pentaerythritol tetramethacrylate, 1,2-ethylene glycol diacrylate, 1,2-ethylene glycol dimethacrylate, 1,6-hexanediol diacrylate, 1,6-hexanediol dimethacrylate, 1,12-dodecano! diacrylate, 1,12-dodecanol dimethacrylate, tris(2-hydroxy ethyl) isocyanurate triacrylate, hexanediol diacrylate, tripropylene glycol diacrylate, dipropylene glycol diacrylate, amine modified polyether acrylate, trimethylolpropane triacrylate, glycerol propoxylate triacrylate, dipentaerythritol pentaacrylate, dipentaerythritol hexaacrylate, ethoxylated pentaerythritol tetraacrylate, or mixtures or combinations thereof.

4. The method according to any of claims 1 to 3, wherein the reactive wax is a hydroxyl-terminated polyethylene wax functionalized with a polymerizable group.

5. The method according to any of claims 1 to 4, wherein the gellant is a compound of the formula 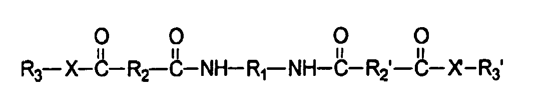 wherein R₁ is (i) an alkylene group, including linear and branched, saturated and unsaturated, cyclic and acyclic, and substituted and unsubstituted alkylene groups, and wherein heteroatoms either may or may not be present in the alkylene group, (ii) an arylene group, including substituted and unsubstituted arylene groups, and wherein heteroatoms either may or may not be present in the arylene group, (iii) an arylalkylene group, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) an alkylarylene group, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₂ and R₂' each, independently of the other, are (i) alkylene groups, including linear and branched, saturated and unsaturated, cyclic and acyclic, and substituted and unsubstituted alkylene groups, and wherein heteroatoms either may or may not be present in the alkylene group, (ii) arylene groups, including substituted and unsubstituted arylene groups, and wherein heteroatoms either may or may not be present in the arylene group, (iii) arylalkylene groups, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) alkylarylene groups, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₃ and R₃' each, independently of the other, are either (a) photoinitiating groups, or (b) groups which are (i) alkyl groups, including linear and branched, saturated and unsaturated, cyclic and acyclic, and substituted and unsubstituted alkyl groups, and wherein heteroatoms either may or may not be present in the alkyl group, (ii) aryl groups, including substituted and unsubstituted aryl groups, wherein heteroatoms either may or may not be present in the aryl group, (iii) arylalkyl groups, including substituted and unsubstituted
arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (iv) alkylaryl groups, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, and X and X' each, independently of the other, is an oxygen atom or a group of the formula -NR₄-, wherein R₄ is (i) a hydrogen atom, (ii) an alkyl group, including linear and branched, saturated and unsaturated, cyclic and acyclic, and substituted and unsubstituted alkyl groups, and wherein heteroatoms either may or may not be present in the alkyl group, (iii) an aryl group, including substituted and unsubstituted aryl groups, and wherein heteroatoms either may or may not be present in the aryl group, (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group.

6. The method according to any of claims 1 to 5, wherein the gellant is a mixture of 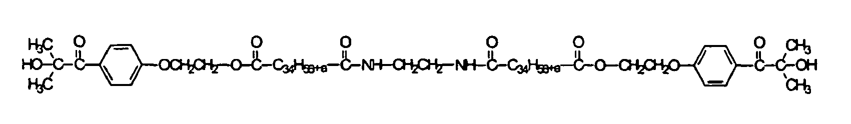 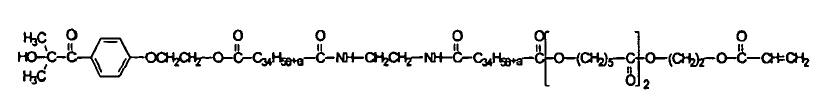 and 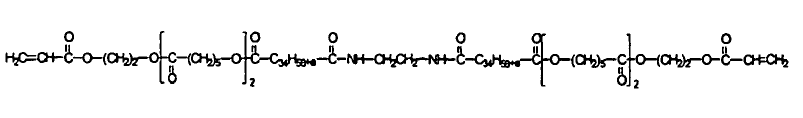 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.

7. The method according to any of claims 1 to 6, wherein multiple layers of the curable ink are cured upon completion of deposition of a last of the multiple layers.

8. The method according to any of claims 1 to 7, wherein each layer of the curable ink is cured prior to deposition of a subsequent layer.

9. The method according to any of claims 1 to 8, wherein the flexible packaging substrate comprises a metal foil, a plastic film, paper, or laminates thereof.

10. The method according to any of claims 1 to 9, wherein the flexible packaging substrate comprises aluminum foil, polyester film, or polypropylene film.

11. A packaging substrate having disposed thereon a tactile image or a combination of tactile image and regular image;
wherein the tactile image or combination of tactile image and regular image comprise one or more cured layers of an ultraviolet curable phase change ink composition wherein the ink composition as disposed comprises an optional colorant and a phase change ink vehicle comprising a radiation curable monomer or prepolymer; a photoinitiator; a reactive wax; and a gallant;
wherein the flexible packaging substrate comprises a metal foil, a plastic film, paper, or laminates thereof; and
wherein the tactile image area or a portion thereof has a raised print height of 30 micrometers to 1 millimeter.

12. The packaging substrate according to claim 11, wherein the at least one curable monomer or prepolymer is a multifunctional acrylate or methacrylate compound.

13. The packaging substrate according to claim 11 or 12, wherein the reactive wax is a hydroxyl-terminated polyethylene wax functionalized with a polymerizable group.

14. The packaging substrate according to any of claims 11 to 13, wherein the flexible packaging substrate comprises aluminum foil, polyester film, or polypropylene film.

## Patentansprüche

1. Verfahren zum Bilden tastbarer Bilder oder einer Kombination aus tastbaren und regulären Bildern auf einem flexiblen Verpackungssubstrat, umfassend:
Aufbringen einer ultraviolett aushärtbaren Phasenwechseltintenzusammensetzung, umfassend einen optionalen Farbstoff und ein Phasenwechseltintenvehikel, umfassend ein durch Strahlung aushärtbares Monomer oder Präpolymer; einen Fotoinitiator; ein reaktives Wachs; und ein Gelierungsmittel direkt auf einem flexiblen Verpackungssubstrat oder
Aufbringen der Tinte auf einem Zwischentransferelement, in einer Bildfläche, um eine tastbare Bildfläche oder eine Kombination aus einer tastbaren Bildfläche und einem regulären Bild zu bilden;
Bilden des tastbaren Bildes durch Aufbringen mehrerer Schichten der Tinte an Stellen der tastbaren Bildfläche oder einem Teil davon;
wenn ein Zwischentransferelement verwendet wird, Transferieren der aufgebrachten Tinte von dem Zwischentransferelement auf das flexible Verpackungssubstrat; und
Aushärten der Tinte;
worin die tastbare Bildfläche oder ein Teil davon eine erhöhte Druckhöhe von 30 Mikrometer bis 1 Millimeter aufweist.

2. Das Verfahren gemäß Anspruch 1, worin das mindestens eine aushärtbare Monomer oder Präpolymer eine multifunktionelle Acrylat- oder Methacrylatverbindung ist.

3. Das Verfahren gemäß Anspruch 2, worin die multifunktionelle Acrylat- oder Methacrylatverbindung propoxyliertes Neopentylglycoldiacrylat, Pentaerythritoltetraacrylat, Pentaerythritoltetramethacrylat, 1,2-Ethylenglycoldiacrylat, 1,2-Ethylenglycoldimethacrylat, 1,6-Hexandioldiacrylat, 1,6-Hexandioldimethacrylat, 1,12-Dodecanoldiacrylat, 1,12-Dodecanoldimethacrylat, Tris(2-hydroxyethyl)isocyanurattriacrylat, Hexandioldiacrylat, Tripropylenglycoldiacrylat, Dipropylenglycoldiacrylat, Amin-modifiziertes Polyetheracrylat, Trimethylolpropantriacrylat, Glycerolpropoxylattriacrylat, Dipentaerythritolpentaacrylat, Dipentaerythritolhexaacrylat, ethoxyliertes Pentaerythritoltetraacrylat oder Mischungen oder Kombinationen daraus ist.

4. Das Verfahren gemäß einem der Ansprüche 1 bis 3, worin das reaktive Wachs ein Hydroxyl-terminiertes Polyethylenwachs ist, das mit einer polymerisierbaren Gruppe funktionalisiert ist.

5. Das Verfahren gemäß einem der Ansprüche 1 bis 4, worin das Gelierungsmittel eine Verbindung der Formel 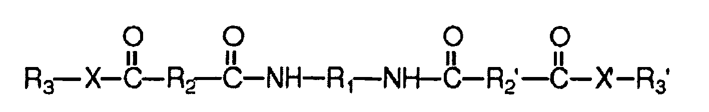 ist, worin R₁ ist (i) eine Alkylengruppe, beinhaltend lineare und verzweigte, gesättigte und ungesättigte, cyclische und acyclische und substituierte und unsubstituierte Alkylengruppen und worin Heteroatome entweder vorhanden oder nicht vorhanden sein können in der Alkylengruppe, (ii) eine Arylengruppe, beinhaltend substituierte und unsubstituierte Arylengruppen und worin Heteroatome entweder vorhanden oder nicht vorhanden sein können in der Arylengruppe, (iii) eine Arylalkylengruppe, beinhaltend substituierte und unsubstituierte Arylalkylengruppen, worin der Alkylteil der Arylalkylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Arylalkylengruppe oder (iv) eine Alkylarylengruppe, beinhaltend substituierte und unsubstituierte Alkylarylengruppen, worin der Alkylteil der Alkylarylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylengruppe; R₂ und **R₂'** sind jeweils unabhängig voneinander
(i) Alkylengruppen, beinhaltend lineare und verzweigte, gesättigte und ungesättigte, cyclische und acyclische und substituierte und unsubstituierte Alkylengruppen und worin Heteroatome entweder vorhanden oder nicht vorhanden sein können in der Alkylengruppe,
(ii) Arylengruppen, beinhaltend substituierte und unsubstituierte Arylengruppen und worin Heteroatome entweder vorhanden oder nicht vorhanden sein können in der Arylengruppe,
(iii) Arylalkylengruppen, beinhaltend substituierte und unsubstituierte Arylalkylengruppen, worin der Alkylteil der Arylalkylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Arylalkylengruppe oder (iv) Alkylarylengruppen, beinhaltend substituierte und unsubstituierte Alkylarylengruppen, worin der Alkylteil der Alkylarylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylengruppe; R₃ und R₃' sind jeweils unabhängig voneinander entweder (a) fotoinitiierende Gruppen oder (b) Gruppen, welche sind (i) Alkylgruppen, beinhaltend lineare und verzweigte, gesättigte und ungesättigte, cyclische und acyclische und substituierte und unsubstituierte Alkylgruppen, und worin Heteroatome entweder vorhanden oder nicht vorhanden sein können in der Alkylgruppe, (ii) Arylgruppen, beinhaltend substituierte und unsubstituierte Arylgruppen, worin Heteroatome entweder vorhanden oder nicht vorhanden sein können in der Arylgruppe, (iii) Arylalkylgruppen, beinhaltend substituierte und unsubstituierte Arylalkylgruppen, worin der Alkylteil der Arylalkylgruppe linear oder verzweigt, gesättigt oder ungesättigt und cyclisch oder acylisch sein kann und worin Heteroatome entweder vorhanden oder nicht vorhanden sein können in entweder dem Aryl- oder dem Alkylteil der Arylalkylgruppe oder (iv) Alkylarylgruppen, beinhaltend substituierte und unsubstituierte Alkylarylgruppen, worin der Alkylteil der Alkylarylgruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylgruppe; und X und X' jeweils unabhängig voneinander ein Sauerstoffatom ist oder eine Gruppe der Formel -NR₄-, worin R₄ ist (i) ein Wasserstoffatom, (ii) eine Alkylgruppe, beinhaltend lineare und verzweigte, gesättigte und ungesättigte, cyclische und acyclische und substituierte und unsubstituierte Alkylgruppen, und worin Heteroatome entweder vorhanden oder nicht vorhanden sein können in der Alkylgruppe, (iii) eine Arylgruppe, beinhaltend substituierte und unsubstituierte Arylgruppen, und worin Heteroatome entweder vorhanden oder nicht vorhanden sein können in der Arylgruppe, (iv) eine Arylalkylgruppe, beinhaltend substituierte und unsubstituierte Arylalkylgruppen, worin der Alkylteil der Arylalkylgruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Arylalkylgruppe oder (v) eine Alkylarylgruppe, beinhaltend substituierte und unsubstituierte Alkylarylgruppen, worin der Alkylteil der Alkylarylgruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylgruppe.

6. Das Verfahren der Ansprüche 1 bis 5, worin das Gelierungsmittel eine Mischung aus 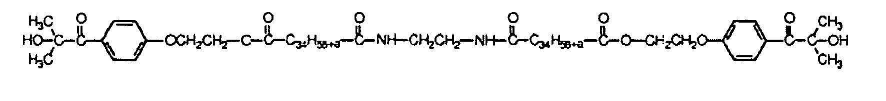 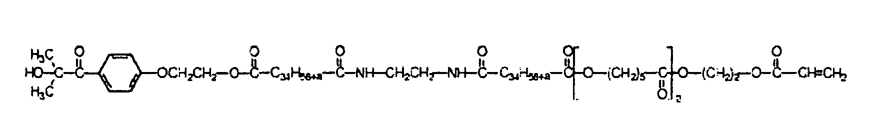 und 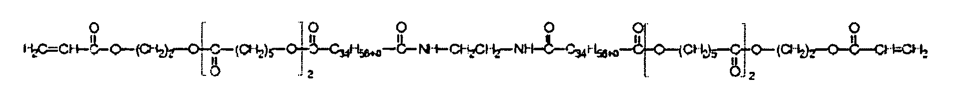 ist, worin -C₃₄H₅₆₊ₐ- eine verzweigte Alkylengruppe, welche Ungesättigtheiten und cyclische Gruppen beinhalten oder nicht beinhalten kann, substituierte und unsubstituierte Alkylengruppen bedeutet und worin Heteroatome in der Alkylengruppe entweder vorhanden oder nicht vorhanden sein können, worin a eine ganze Zahl von 0, 1, 2, 3, 4, 5, 6, 7, 8, 9, 10, 11 oder 12 ist.

7. Das Verfahren gemäß einem der Ansprüche 1 bis 6, worin die mehrere Schichten der aushärtbaren Tinte nach Beendigung des Aufbringens der letzten der mehreren Schichten ausgehärtet werden.

8. Das Verfahren gemäß einem der Ansprüche 1 bis 7, worin jede Schicht der aushärtbaren Tinte vor dem Aufbringen einer nachfolgenden Schicht ausgehärtet wird.

9. Das Verfahren gemäß einem der Ansprüche 1 bis 8, worin das flexible Verpackungssubstrat eine Metallfolie, einen Plastikfilm, Papier oder Laminate davon umfasst.

10. Das Verfahren gemäß einem der Ansprüche 1 bis 9, worin das flexible substrat Aluminiumfolie, Polyesterfilm oder Polypropylenfilm umfasst.

11. Verpackungssubstrat, auf welches ein tastbares Bild oder eine Kombination aus einem tastbaren Bild und einem regulären Bild aufgebracht ist;
worin das tastbare Bild oder die Kombination aus einem tastbaren Bild und einem regulären Bild eine oder mehrere ausgehärtete Schichten einer ultraviolett aushärtbaren Phasenwechseltintenzusammensetzung umfasst, worin die Tintenzusammensetzung, wie aufgebracht, einen optionalen Farbstoff und ein Phasenwechseltintenvehikel umfasst, welches ein durch Strahlung aushärtbares Monomer oder Präpolymer; einen Fotoinitiator; ein reaktives Wachs; und ein Gelierungsmittel umfasst;
worin das flexible Verpackungssubstrat eine Metallfolie, einen Plastikfilm, Papier oder Laminate davon umfasst; und
worin die tastbare Bildfläche oder ein Teil davon eine erhöhte Druckhöhe von 30 Mikrometer bis 1 Millimeter aufweist.

12. Das Verpackungssubstrat gemäß Anspruch 11, worin das mindestens eine aushärtbare Monomer oder Präpolymer eine multifunktionelle Acrylat- oder Methacrylatverbindung ist.

13. Das Verpackungssubstrat gemäß Anspruch 11 oder 12, worin das reaktive Wachs ein Hydroxyl-terminiertes Polyethylenwachs ist, das mit einer polymerisierbaren Gruppe funktionalisiert ist.

14. Das Verpackungssubstrat gemäß einem der Ansprüche 11 bis 13, worin das flexible Verpackungssubstrat Aluminiumfolie, Polyesterfilm oder Polypropylenfilm umfasst.

## Revendications

1. Procédé de formation d'images tactiles ou d'une combinaison d'images tactiles et normales sur un substrat d'emballage souple comprenant :
le dépôt d'une composition d'encre à changement de phase durcissable aux ultraviolets comprenant une matière colorante facultative et un véhicule d'encre à changement de phase comprenant un monomère ou un prépolymère durcissable par un rayonnement ; un photoinitiateur ; une cire réactive ; et un gélifiant directement sur un substrat d'emballage souple ou le dépôt de l'encre sur un élément de transfert intermédiaire, dans une zone d'image pour former une zone d'image tactile ou une combinaison d'une zone d'image tactile et d'image normale ;
la formation de l'image tactile par dépôt de couches multiples de l'encre sur des emplacements de la zone d'image tactile ou d'une partie de celle-ci ;
lorsqu'un élément de transfert intermédiaire est utilisé, le transfert de l'encre déposée de l'élément de transfert intermédiaire sur le substrat d'emballage souple ; et
le durcissement de l'encre,
dans lequel la zone d'image tactile ou une partie de celle-ci a une hauteur d'impression en surélévation de 30 micromètres à 1 millimètre.

2. Procédé selon la revendication 1, dans lequel l'au moins un monomère ou prépolymère durcissable est un composé acrylate ou méthacrylate multifonctionnel.

3. Procédé selon la revendication 2, dans lequel le composé acrylate ou méthacrylate multifonctionnel est un diacrylate de néopentyl glycol propoxylé, un tétraacrylate de pentaérythritol, un tétraméthacrylate de pentaérythritol, un diacrylate de 1,2-éthylène glycol, un diméthacrylate de 1,2-éthylène glycol, un diacrylate de 1,6-hexanediol, un diméthacrylate de 1,6-hexanediol, un diacrylate de 1,12-dodécanol, un diméthacrylate de 1,12-dodécanol, un isocyanurate triacrylate de tris(2-hydroxy éthyle), un diacrylate d'hexanediol, un diacrylate de tripropylène glycol, un diacrylate de dipropylène glycol, un acrylate de polyéther modifié avec une amine, un triacrylate de triméthylolpropane, un propoxylate triacrylate de glycérol, un pentaacrylate de dipentaérythritol, un hexaacrylate de dipentaérythritol, un tétraacrylate de pentaérythritol éthoxylé, ou des mélanges ou combinaisons de ceux-ci.

4. Procédé selon l'une quelconque des revendications 1 à 3, dans lequel la cire réactive est une cire de polyéthylène terminé par un hydroxyle fonctionnalisé avec groupe polymérisable.

5. Procédé selon l'une quelconque des revendications 1 à 4, dans lequel le gélifiant est un composé de la formule 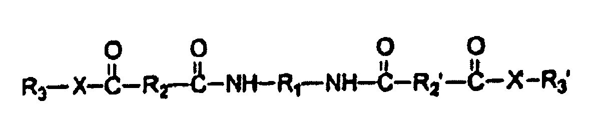 dans laquelle R₁ est (i) un groupe alkylène, incluant des groupes alkylène linéaires et ramifiés, saturés et insaturés, cycliques et acycliques, et substitués et non substitués, et dans lequel des hétéroatomes peuvent être ou non présents dans le groupe alkylène, (ii) un groupe arylène, incluant des groupes arylène substitués et non substitués, et dans lequel des hétéroatomes peuvent être ou non présents dans le groupe arylène, (iii) un groupe arylalkylène, incluant des groupes arylalkylène substitués et non substitués, dans lequel la partie alkyle du groupe arylalkylène peut être linéaire ou ramifiée, saturée ou insaturée, et cyclique ou acyclique, et dans lequel des hétéroatomes peuvent être ou non présents dans la partie aryle ou alkyle du groupe arylalkylène, ou (iv) un groupe alkylarylène, incluant des groupes alkylarylène substitués et non substitués, dans lequel la partie alkyle du groupe alkylarylène peut être linéaire ou ramifiée, saturée ou insaturée, et cyclique ou acyclique, et dans lequel des hétéroatomes peuvent être ou non présents dans la partie aryle ou alkyle du groupe alkylarylène ; R₂ et R₂', chacun indépendamment de l'autre, sont (i) des groupes alkylène, incluant des groupes alkylène linéaires et ramifiés, saturés et insaturés, cycliques et acycliques, et substitués et non substitués, et dans lesquels des hétéroatomes peuvent être ou non présents dans le groupe alkylène, (ii) des groupes arylène, incluant des groupes arylène substitués et non substitués, et dans lesquels des hétéroatomes peuvent être ou non présents dans le groupe arylène, (iii) des groupes arylalkylène, incluant des groupes arylalkylène substitués et non substitués, dans lesquels la partie alkyle du groupe arylalkylène peut être linéaire ou ramifiée, saturée ou insaturée, et cyclique ou acyclique, et dans lesquels des hétéroatomes peuvent être ou non présents dans la partie aryle ou alkyle du groupe arylalkylène, ou (iv) des groupes alkylarylène, incluant des groupes alkylarylène substitués et non substitués, dans lesquels la partie alkyle du groupe alkylarylène peut être linéaire ou ramifiée, saturée ou insaturée, et cyclique ou acyclique, et dans lesquels des hétéroatomes peuvent être ou non présents dans la partie aryle ou alkyle du groupe alkylarylène ; R₃ et R₃', chacun indépendamment de l'autre, sont soit (a) des groupes de photoinitiation, soit (b) des groupes qui sont (i) des groupes alkyle, incluant des groupes alkyle linéaires et ramifiés, saturés et insaturés, cycliques et acycliques, et substitués et non substitués, et dans lesquels des hétéroatomes peuvent être ou non présents dans le groupe alkyle, (ii) des groupes aryle, incluant des groupes aryle substitués et non substitués, dans lesquels des hétéroatomes peuvent être ou non présents dans le groupe aryle, (iii) des groupes arylalkyle, incluant des groupes arylalkyle substitués et non substitués, dans lesquels la partie alkyle du groupe arylalkyle peut être linéaire ou ramifiée, saturée ou insaturée, et cyclique ou acyclique, et dans lesquels des hétéroatomes peuvent être ou non présents dans la partie aryle ou alkyle du groupe arylalkyle, ou (iv) des groupes alkylaryle, incluant des groupes alkylaryle substitués et non substitués, dans lesquels la partie alkyle du groupe alkylaryle peut être linéaire ou ramifiée, saturée ou insaturée, et cyclique ou acyclique, et dans lequel des hétéroatomes peuvent être ou non présents dans la partie aryle ou alkyle du groupe alkylaryle ; et X et X', chacun indépendamment de l'autre, est un atome d'oxygène ou un groupe de la formule -NR₄-, dans laquelle R₄ est (i) un atome d'hydrogène, (ii) un groupe alkyle, incluant des groupes alkyle linéaires et ramifiés, saturés et insaturés, cycliques et acycliques, et substitués et non substitués, et dans lequel des hétéroatomes peuvent être ou non présents dans le groupe alkyle, (iii) un groupe aryle, incluant des groupes aryle substitués et non substitués, et dans lequel des hétéroatomes peuvent être ou non présents dans le groupe aryle, (iv) un groupe arylalkyle, incluant des groupes arylalkyle substitués et non substitués, dans lequel la partie alkyle du groupe arylalkyle peut être linéaire ou ramifiée, saturée ou insaturée, et cyclique ou acyclique, et dans lequel des hétéroatomes peuvent être ou non présents dans la partie aryle ou alkyle du groupe arylalkyle, ou (v) un groupe alkylaryle, incluant des groupes alkylaryle substitués et non substitués, dans lequel la partie alkyle du groupe alkylaryle peut être linéaire ou ramifiée, saturée ou insaturée, et cyclique ou acyclique, et dans lequel des hétéroatomes peuvent être ou non présents dans la partie aryle ou alkyle du groupe alkylaryle.

6. Procédé selon l'une quelconque des revendications 1 à 5, dans lequel le gélifiant est un mélange de 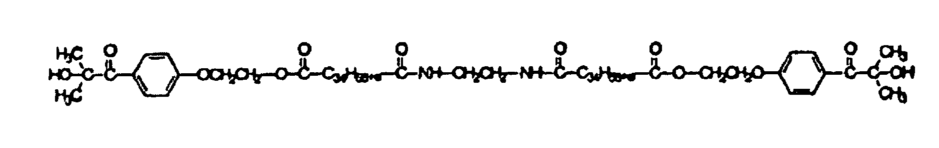 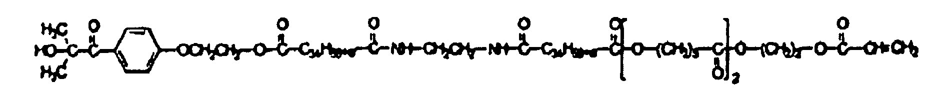 et 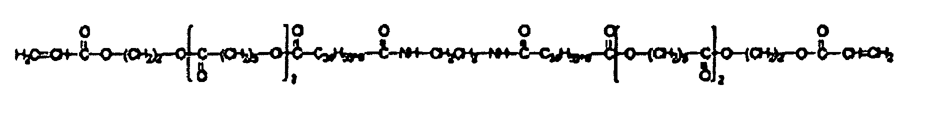 dans lesquelles -C₃₄H₅₆₊ₐ- représente un groupe alkylène ramifié, qui peut inclure ou non des insaturations et des groupes cycliques, des groupes alkylène substitués et non substitués, et dans lequel des hétéroatomes peuvent être ou non présents dans le groupe alkylène, dans lequel a est un entier de 0, 1, 2, 3, 4, 5, 6, 7, 8, 9, 10, 11, ou 12.

7. Procédé selon l'une quelconque des revendications 1 à 6, dans lequel des couches multiples de l'encre durcissable sont durcies à la fin du dépôt d'une dernière des couches multiples.

8. Procédé selon l'une quelconque des revendications 1 à 7, dans lequel chaque couche de l'encre durcissable est durcie avant le dépôt d'une couche suivante.

9. Procédé selon l'une quelconque des revendications 1 à 8, dans lequel le substrat d'emballage souple comprend une feuille métallique, un film plastique, un papier, ou des stratifiés de ceux-ci.

10. Procédé selon l'une quelconque des revendications 1 à 9, dans lequel le substrat d'emballage souple comprend une feuille d'aluminium, un film de polyester, ou un film de polypropylène.

11. Substrat d'emballage ayant, disposée sur celui-ci, une image tactile ou une combinaison d'image tactile et d'image normale ;
dans lequel l'image tactile ou la combinaison d'image tactile et d'image normale comprend une ou plusieurs couche(s) durcie(s) d'une composition d'encre à changement de phase durcissable aux ultraviolets dans laquelle la composition d'encre telle qu'elle est disposée comprend une matière colorante facultative et un véhicule d'encre à changement de phase comprenant un monomère ou un prépolymère durcissable par un rayonnement ; un photoinitiateur ; une cire réactive ; et un gélifiant ;
dans lequel le substrat d'emballage souple comprend une feuille métallique, un film plastique, un papier, ou des stratifiés de ceux-ci ; et
dans lequel la zone d'image tactile ou une partie de celle-ci a une hauteur d'impression en surélévation de 30 micromètres à 1 millimètre.

12. Substrat d'emballage selon la revendication 11, dans lequel l'au moins un monomère ou prépolymère durcissable est un composé acrylate ou méthacrylate multifonctionnel.

13. Substrat d'emballage selon la revendication 11 ou 12, dans lequel la cire réactive est une cire de polyéthylène terminé par un hydroxyle fonctionnalisé avec groupe polymérisable.

14. Substrat d'emballage selon l'une quelconque des revendications 11 à 13, dans lequel le substrat d'emballage souple comprend une feuille d'aluminium, un film de polyester, ou un film de polypropylène.
